(19) 

Europäisches
Patentamt

European
Patent Office

Office européen
des brevets

(11) **EP 1 392 004 B1**

(12) **EUROPEAN PATENT SPECIFICATION**

(45) Date of publication and mention
of the grant of the patent:
**21.01.2009  Bulletin 2009/04**

(51) Int Cl.:
*H04B 7/04* (2006.01)     *H04L 27/26* (2006.01)
*H04B 17/00* (2006.01)

(21) Application number: **03447187.0**

(22) Date of filing: **18.07.2003**

(54) **Method for multi-user MIMO transmission and apparatuses suited therefore**

Verfahren zur MIMO-Übertragung für mehrere Benutzer und entsprechende Vorrichtungen

Procédé de transmission MIMO à plusieurs utilisateurs et dispositifs appropriés

(84) Designated Contracting States:
**AT BE BG CH CY CZ DE DK EE ES FI FR GB GR
HU IE IT LI LU MC NL PT RO SE SI SK TR**

(30) Priority: **22.08.2002  US 405759 P**

(43) Date of publication of application:
**25.02.2004  Bulletin 2004/09**

(73) Proprietor: **INTERUNIVERSITAIR
MICROELEKTRONICA CENTRUM VZW
3001 Leuven (BE)**

(72) Inventors:
• **Bourdoux, André
4130 Esneux (BE)**
• **Khaled, Nadia
3000 Leuven (BE)**

(74) Representative: **BiiP cvba
Gaston Crommenlaan 10 bus 101
9050 Gent (Ledeberg) (BE)**

(56) References cited:
**EP-A- 0 762 541          EP-A- 1 185 001
WO-A-01/71928          WO-A-02/33848
WO-A-97/00543          WO-A-98/09381**

• **LI Y ET AL: "TRANSMITTER DIVERSITY FOR
OFDM SYSTEMS AND ITS IMPACT ON HIGH-
RATE DATA WIRELESS NETWORKS" IEEE
JOURNAL ON SELECTED AREAS IN
COMMUNICATIONS, IEEE INC. NEW YORK, US,
vol. 17, no. 7, July 1999 (1999-07), pages
1233-1243, XP000834945 ISSN: 0733-8716**

**Description**

**Field of the invention**

The present invention is related to a method for multi-user MIMO transmission, more in particular, a method for transmission between a base station and U (>1) user terminals, said base station and user terminals each equipped with more than one antenna, preferably in conjunction with considering the optimising of joint transmit and receive filters, for instance in a MMSE context. Further the invention discloses base station and user terminal devices suited for execution of said method.

**State of the art**

Multi-input multi-output (MIMO) wireless communications have attracted a lot of interest in the recent years as they offer a multiplicity of spatial channels for the radio links, hence provide a significant capacity or diversity increase compared to conventional single antenna communications.

Multi-Input Multi-Output (MIMO) wireless channels have significantly higher capacities than conventional Single-Input Single-Output (SISO) channels. These capacities are related to the multiple parallel spatial subchannels that are opened through the use of multiple antennas at both the transmitter and the receiver. Spatial Multiplexing (SM) is a technique that transmits parallel independent data-streams on these available spatial subchannels in an attempt to approach the MIMO capacities.

In addition, Spatial-Division Multiple Access (SDMA) is very appealing thanks to its inherent reuse (simultaneously for various users due to the exploitation of the distinct spatial signatures of the users) of the precious frequency bandwidth.

Several MIMO approaches can be followed which can be classified according to whether or not they require channel knowledge at either the transmitter or the receiver. Obviously, when the channel is known at both sides, the best performance can be obtained.

The optimal solution is provided by SVD weights combined with a water-pouring strategy. However, this strategy must adaptively control the number of streams and also the modulation and coding in each stream, which makes it inconvenient for wireless channels.

A sub-optimal approach consists in using a fixed number of data streams and identical modulation and coding as in a single-user joint TX-RX MMSE optimisation [H. Sampath and A. Paulraj, "Joint TX & RX Optimisation for High Data Rate Wireless Communication Using Multiple Antennas", Asilomar conf. On signals, systems and computers, pp. 215-219, Asilomar, California, November 1999]. This latter solution is more convenient but is not directly applicable to SDMA MIMO communications where a multi-antenna base station communicates at the same time with several multi-antenna terminals. Indeed, the joint TX-RX optimisation requires channel knowledge at both sides, which is rather unfeasible at the terminal side (the terminal only knows 'its' part of the multi-user wireless channel).

To approach the potential MIMO capacity while optimising the system performance, several joint Tx/Rx MMSE design have been proposed.

Two main design trends have emerged that enable Spatial Multiplexing corresponding to whether Channel State Information (CSI) is available or not at the transmitter. On the one hand, BLAST-like space-time techniques make use of the available transmit antennas to transmit as many independent streams and do not require CSI at the transmitter. On the other hand, the joint transmit and receive space-time processing takes advantage of the potentially available CSI at both sides of the link to maximise the system's information rate or alternatively optimise the system performance, under a fixed rate constraint.

Within multi-user MIMO transmission schemes multi-user interference results in a performance limitation. Further is the joint determination of optimal filters for both the base station and the user terminals in the case of a multi-user context very complex.

**[0011]** [0010b] In patent application WO01/71928 a high efficiency, high performance communications system employing multi-carrier modulation is disclosed. The transceiver units can provide antenna, frequency or temporal diversity for transmitted signals. The system data processor receives and partitions an input data stream into a number of channel data streams and further processes the streams. The communication system may be a multi-user, multiple access system. Full or partial channel state information may be available to the transmitter unit. In a specific implementation the transmitter unit preconditions the signals presented to the transmit antennas in a way unique to a specific receiver. When using appropriate filtering at the receiver unit the demodulated can be free of channel distortion, while also any interference between various users/antennas can be eliminated. This operation involves a full diagonalisation of the matrix describing the transmission path (including pre- and post-filtering).

Application WO02/33848-A2 describes a network employing space-division multiple access (SDMA) wherein multiple subscriber units communicate with a base station using an OFDMA (orthogonal frequency division multiple access) protocol. Traffic channel allocation logic allocates OFDMA channels using the broadband spatial signature vectors of the subscribers.

## Aims of the invention

The present invention aims to provide a solution for the problem of multi-user interference in a multi-user MIMO transmission scheme, which results in a reasonably complex filter determination in the case of joint optimal filter determination, although the invention is not limited thereto.

## Summary of the invention

The invention relates to a method of multi-user MIMO transmission of data signals from at least one transmitting terminal with a spatial diversity means to at least two receiving user terminals, each provided with spatial diversity receiving means, comprising the steps of

- dividing said data signals into a plurality of streams of data sub-signals,
- determining combined data signals in said transmitting terminal, said combined data signals being versions of said streams of data sub-signals transformed by a transmitter filtering step so designed that at least one of said spatial diversity means of said receiving user terminals only receives data sub-signals being specific for the corresponding receiving user terminal and having interference between at least two streams of said plurality of streams of data subsignals said transmitter filtering step being specific for said corresponding receiving user terminal,
- inverse subband processing said combined data signals,
- transmitting with said spatial diversity means said inverse subband processed combined data signals,
- receiving on at least one of said spatial diversity receiving means of at least one of said receiving user terminals received data signals, being at least function of said inverse subband processed combined data signals,
- determining on at least one of said receiving user terminals estimates of said data sub-signals from said received data signals, eliminating on said at least one receiving user terminal said interference between said at least two streams of said estimates of said data such-signals, and
- collecting said estimates of said data sub-signals into estimates of said data signals.

Preferably the transmission of the inverse subband processed combined data signals is performed in an at least partially simultaneous way.
Typically the spectra of the inverse subband processed combined data signals are at least partly overlapping.
In an advantageous embodiment the step of determining combined data signals in the transmitting terminal is carried out on a subband by subband basis.
In a preferable embodiment the step of determining the estimates of said data sub-signals in the receiving terminals comprises subband processsing.
The step of determining combined data signals in the transmitting terminal advantageously comprises the steps:

- determining intermediate combined data signals by subband processing the data signals,
- determining the combined data signals from the intermediate combined data signals.

In a preferred embodiment the subband processing is orthogonal frequency division demultiplexing and the inverse subband processing is orthogonal frequency division multiplexing.
In another preferable embodiment of the method the subbands, involved in inverse subband processing, are grouped into sets, whereby at least one set comprises of at least two subbands and the step of determining combined data signals in the transmitting terminal comprises the steps of:

- determining relations between the data signals and the combined data signals on a set-by-set basis; and
- exploiting the relations between the data signals and the combined data signals for determining the data signals.

Typically a guard interval is introduced in the inverse subband processed combined data signals.
Advantageously the step of determining estimates of the sub-signals comprises a receiver filtering step, said transmitter filtering step and said receiver filtering step being determined on a user-per-user basis.
In another preferred embodiment the number of streams of data sub-signals is variable.
In a very advantageous embodiment the number of streams is selected in order to minimise the error between the estimates of the data sub-signals and the data sub-signals themselves.
Alternatively the number of streams is selected in order to minimise the system bit error rate.

In a second aspect the invention relates to a method of transmitting data signals from at least two transmitting terminals each provided with spatial diversity transmitting means to at least one receiving terminal with a spatial diversity receiving means comprising the steps of

- dividing (105) said data signals (50) into a plurality of streams of data sub-signals (108),
- transforming versions of said streams of said data sub-signals (108) into transformed data signals (70),
- transmitting from said transmitting terminals (20) said transformed data signals (70),
- receiving on said spatial diversity receiving means (80) received data signals being at least function of at least two of said transformed data signals (70),
- subband processing (90) of at least two of said received data signals in said receiving terminal (40),
- applying a linear filtering (95) on said subband processed received data signals, said linear filtering and said transforming being selected such that the filtered subband processed received data signals are specific for one of said transmitting terminals and have interference between at least two streams of said plurality of streams of data suchsignals,
- determining (150) estimates of said data sub-signals (120) from said filtered subband processed received data signals (140) in said receiving terminal, eliminating on said receiving terminal said interference between said at least two streams of said estimates of said data sub-signals, and
- collecting said estimates of said data sub-signals into estimates of said data signals.

Preferably the transmission is at least partially simultaneous and the spectra of the transformed data signals are at least partly overlapping.

The transformation of the data sub-signals to transformed data sub-signals typically comprises the step of inverse subband processing.

In an alternative embodiment the step of determining estimates of the data sub-signals from subband processed received data signals in the receiving terminal comprises the steps of:

- determining intermediate estimates of the data sub-signals from the subband processed received data signals in the receiving terminal,
- obtaining the estimates of the data sub-signals by inverse subband processing the intermediate estimates.

Another object of the invention relates to an apparatus for transmitting inverse subband processed combined data signals to at least two receiving user terminal with spatial diversity means comprising at least :

- at least one spatial diversity transmitting means,
- circuitry being adapted for dividing data signals into streams of data sub-signals,
- circuitry being adapted for combining the data signals, such that at least one of said spatial diversity means of said receiving user terminals only receives data sub-signals being specific for the corresponding receiving user terminal and having interference between at least two streams of data sub-signals.
- circuitry being adapted for inverse subband processing combined data signals,
- circuitry being adapted for transmitting inverse subband processed combined data signals with said spatial diversity means.

Advantageously the circuitry being adapted for combining data signals comprises a plurality of circuits each being adapted for combining data signals based on part of the subbands of the data sub-signals.

In another embodiment the spatial diversity transmitting means comprises at least two transmitting means and the circuitry being adapted for transmitting inverse subband processed combined data signals comprises a plurality of circuits each being adapted for transmitting the inverse subband processed combined data signals with one of the transmitting means of the spatial diversity means.

Yet another object relates to an apparatus for transmitting data signals to at least two receiving user terminals with spatial diversity means, comprising at least

- At least one spatial diversity transmitting means,
- Circuitry being adapted for dividing data signals into streams of data sub-signals,
- Circuitry being adapted for transforming versions of the data sub-signals,
- Circuitry being adapted for transmitting with spatial diversity means said transformed versions of said streams of data sub-signals, comprising a filter so designed that at least one of said spatial diversity means of said receiving user terminals only receives data sub-signals being specific for the corresponding receiving user terminal and having interference between at least two streams of data sub-signal.

## Short description of the drawings

Fig. 1 represents a downlink communication set-up.

Fig. 2 represents an uplink communication set-up.

Fig. 3 represents the multi-user (U>1), MIMO (A>1, $B^u \geq 1$), multi-stream ($C^u \geq 1$) context of the invention.

Fig. 4 represents the involved matrices.

Fig. 5 and 6 represent simulations results for the block diagionalisation approach used in the context of joined transmit and receive filter optimization.

Fig. 7 represents the matrix dimension for 8 antennas at the base station.

Fig. 8 represents a Spatial Multiplexing MIMO System.

Fig. 9 represents the existence (a) and distribution (b) of the optimal number of streams *Popt* for a (6,6) MIMO system.

Fig. 10 represents *popt* 's distribution for different reference rates *R*.

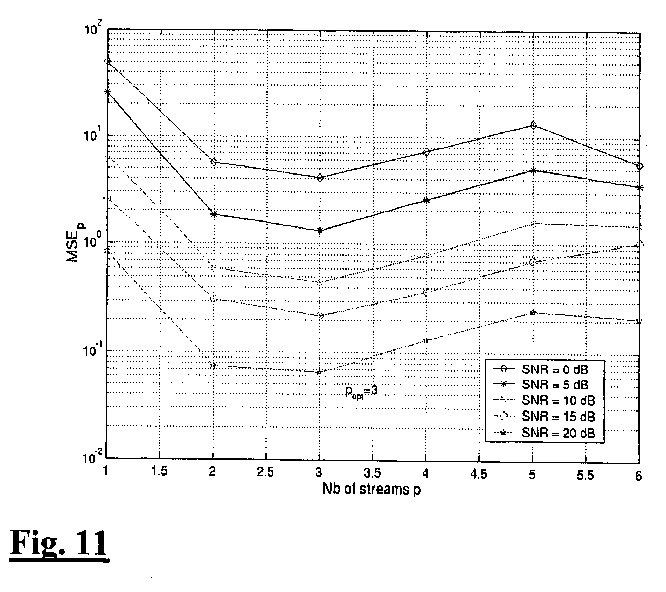

Fig. 11 represents the $MSE_p$ versus *p* for different SNR levels.

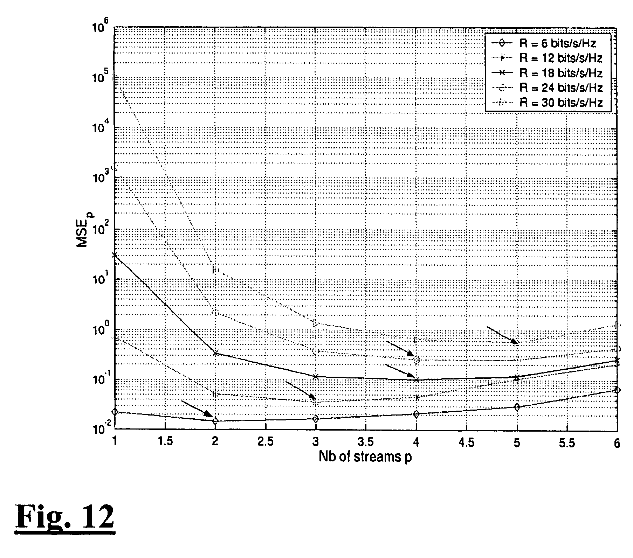

Fig. 12 represents a comparison between the exact $MSE_p$ and the simplified one.

Fig. 13 represents a comparison between the BER performance of the spatially optimised and conventional Tx/Rx MMSE.

Fig. 14 represents a comparison of the spatially optimised joint Tx/Rx MMSE to the optimal joint Tx/Rx MMSE and spatial adaptive loading for different reference rates *R*.

Fig. 15 represents a block diagram of a multi-antenna base station with calibration loop.

Fig. 16 represents the BER degradation with and without calibration.

Fig. 17 represents a second calibration method. The meaning of the references is as follows :

- T1= complete TX transfer function (TF) until input of directional coupler #1 (DC1),
- R1= complete RX TF from DC1 input till end of RX1 (so T/R switch is included in T1 and R1),
- D1=TF of DC1 in the direct path,
- C1=TF from DC1 input, through coupled port until combined port of top splitter/combiner,
- T2, R2, D2 and C2 are similarly defined,
- TR=TF of reference TX until combined port of bottom splitter,
- RR=TF from combined port of bottom splitter till end of reference RX.

## Detailed description of the invention

The invention is not limited to the detailed description of the invention found below.

The invention concerns (wireless) communication between terminals. One can logically group the terminals on each side of the communication and call them peers. The peer(s) on one side of the communication can embody at least two user terminals, whereas on the other side the peer(s) can embody at least one base station. The focus of the invention is thus multi-user. The peers can transmit and/or receive information. For example, the peers can communicate in a half-duplex, i.e. either transmitting or receiving at one time instance or a full duplex fashion, i.e. substantially simultaneously transmitting and receiving.

The invention introduces MIMO wireless communication channels, as they have significantly higher capacities than conventional SISO channels. Several MIMO approaches are used, depending on whether or not channel knowledge is available at either the transmit or receive side, as will be discussed later in the text.

The invention introduces Space Division Multiple Access (SDMA) techniques for systems making use of subband processing, and thus fits in a multi-carrier approach. In the invention, all communication peers (30) (230) consist of terminal(s) (40) (240) disposing of transmitting and/or receiving means (80) (220) that are able to provide different spatial samples of the transmitted and/or received signals. These transmission and/or receiving means are called spatial diversity means. A peer at the base station side is called a processing peer (30)(230). A processing peer communicates with at least two terminals at an opposite peer (10) (340), which can operate at least partially simultaneously and the communicated signals' spectra can at least partially overlap. Note that Frequency Division Multiple Access techniques rely on signals spectra being non-overlapping while Time Division Multiple Access techniques rely on communicating signals in different time slots thus not simultaneously. The opposite peer(s) consisting of at least two user terminals (20) (330) using the same frequencies at the same time, will be called the composite peer(s) (10) (340). The invention concerns (wireless) communication between terminals whereby at least the processing peer(s) (30) (230) disposes of subband processing means.

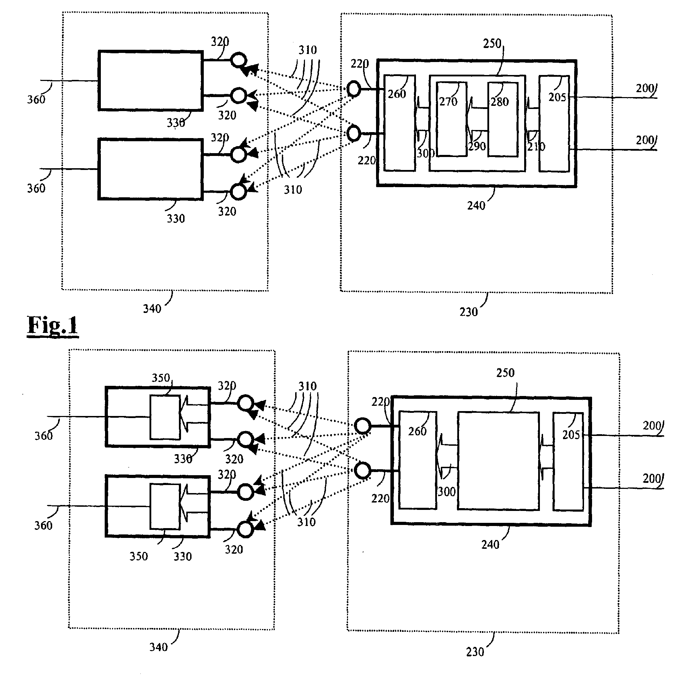

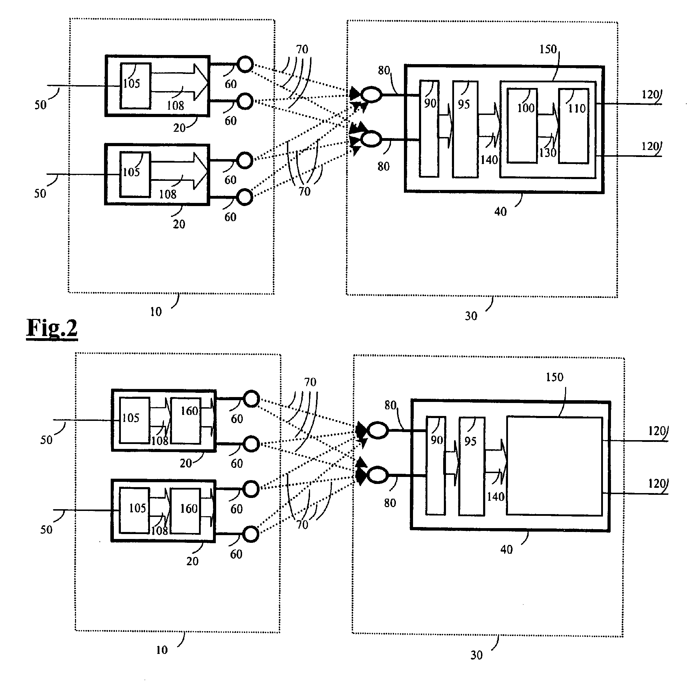

The communication between a composite peer and a processing peer can consist of downlink (Figure 1) and uplink (Figure 2) transmissions. With uplink transmission is meant a transmission whereby the composite peer transmits data signals and the processing peer receives data signals. With downlink transmission is meant a transmission whereby the processing peer transmits data signals and the composite peer receives data signals. The uplink and downlink transmissions can either be simultaneous (full duplex) with respect to the channel (for example using different frequency bands), or they can operate in a time-duplex fashion (half duplex) (for example using the same frequency band), or any other configuration.

In the invention a (linear) pre-filter is used at the transmit side, that achieves a block diagonalisation of the channel. At the receiver side (linear) post-filtering is applied.

(Wireless) transmission of data or a digital signal from a transmitting to a receiving circuit requires digital to analogue conversion in the transmission circuit and analogue to digital conversion in the receiving circuit. In the further description the apparatus in the communication set-up is assumed to have transmission and receiving means, also denoted front-end, incorporating these analogue-to-digital and digital-to-analogue conversion means including amplification or signal level gain control and realising the conversion of the RF signal to the required baseband signal and vice versa. A front-end can comprise amplifiers, filters and mixers (down converters) . As such in the text all signals are represented as a sequence of samples (digital representation), thereby assuming that the above-mentioned conversion also takes place. This assumption does not limit the scope of the invention though. Communication of a data or a digital signal is thus symbolised as the transmission and reception of a sequence of (discrete) samples. Prior to transmission, the information contained in the data signals can be fed to one or more carriers or pulse-trains by mapping said data signals to symbols which consequently modulate the phase and/or amplitude of the carrier(s)or pulse-trains (e.g. using QAM or QPSK modulation). The symbols belong to a finite set, which is called the transmitting alphabet. The signals resulting after performing modulation and/or front-end operations on the data signals, are called transformed data signals, to be transmitted further.

After reception by the receiving means, the information contained in the received signals is retrieved by transformation and estimation processes. These transformation and estimation processes can include, but should not include demodulation, subband processing, decoding, equalisation. After said estimation and transformation processes, received data signals are obtained consisting of symbols belonging to a finite set, which is called the receiving alphabet. The receiving alphabet is preferably equal to the transmitting alphabet.

The invention can further exploit methods and means for measuring the channel impulse responses between the transmission and/or reception means of the individual user terminals at the composite peer on the one hand, and the spatial diversity means of the processing peer on the other hand. The channel impulse responses measurement can be either obtained on basis of an uplink transmission and/or on basis of a downlink transmission. The thus measured channel impulse responses can be used by the processing peer and/or composite peer in uplink transmissions and/or in downlink transmissions. This however assumes perfect reciprocity between transceiver circuits, which usually is not the case in practice because of e.g. the different filters being used in transmit and receive path. Later in the description some methods are discussed to solve the non-reciprocity issue. The invention can further exploit methods for determining the received data signal power and methods for determining the interference ratio of data signals.

The spatial diversity means ensures the reception or transmission of distinct spatial samples of the same signal. This set of distinct spatial samples of the same signal is called a spatial diversity sample. In an embodiment, spatial diversity means embody separate antennas. In this embodiment, the multiple antennas belonging to one terminal can be placed spatially apart (as in Figure 1 and 2), or they can use a different polarisation. The multiple antennas belonging to one terminal are sometimes collectively called an antenna array. The invention is maximally efficient if the distinct samples of the spatial diversity sample are sufficiently uncorrelated. In an embodiment the sufficiently uncorrelated samples are achieved by placing different antennas apart over a sufficiently large distance. For example, the distance between different antennas can be chosen to be half a wavelength of the carrier frequency at which the communication takes place. Spatial diversity samples are thus different from each other due to the different spatial trajectory from the transmitting means to their respective receiving means or vice versa. Alternatively said spatial diversity samples are different from each other due to the different polarisation of their respective receiving or transmitting means.

The described methods rely on the fact that at least the processing peer performs an inverse subband processing, called ISP in the sequel, in the downlink mode (Figure 1) and subband processing, called SP in the sequel, in the uplink mode (Figure 2). Furthermore, in the downlink mode SP takes place either in the composite peer after reception (see Figure 1 bottom) or in the processing peer before ISP (see Figure 1 top). In the uplink mode ISP takes place either in the composite peer prior to transmission (see Figure 2 bottom) or in the processing peer after SP (see Figure 2 top). The scenarios where both ISP and SP are in either transmission direction carried out in the processing peer, are called concentrated scenarios. The remaining scenarios, i.e. where ISP and SP are carried out in different peers in either transmission direction, are called split scenarios.

It should be mentioned that the communication methods intend to transmit data signals from one peer to another peer but that due to transmission conditions in fact only estimates of the data signals can be obtained in the receiving peer. The transmission methods naturally intend to be such that the data signal estimates are approximating the data signals as closely as technically possible.

The downlink transmission methods for communication between a base station and U (>1) user terminals can be formalised as a first aspect of the invention. These methods are characterised in that a double level of spatial multiplexing is used: the users are spatially multiplexed (SDMA) and each user receives spatially multiplexed bit streams (SDM). The methods further involve the steps of (linear) pre-filtering in the base station and possibly (linear) post-filtering in at least one of the user terminals. Substantially simultaneously $C = \Sigma C^u$ independent information signals are sent from the base transceiver station to the U remote transceivers, whereby, for each remote transceiver, the information Cu signals share the same conventional channel. The base transceiver station has an array of N (>1) base station antennas (defining a spatial diversity means). Each of the remote transceivers have an array of $M^u$ (>1) remote transceiver antennas (also defining a spatial diversity means), $M^u$ being terminal specific as each terminals may have different number of antennas. The purpose of the method is that each of the U remote transceivers be capable of determining a close estimate of the $C^u$ independent information signals, said estimate being constructed from a $M^u$ component signal vector received at the related remote transceivers antenna array. The invented method comprises the step of dividing each of the C independent signals into a plurality of streams of $C^u$ sub-signals and computing an N-component transmission vector U as a weighted sum of C N-component vectors $V_i$ wherein the sub-signals are used as weighting coefficients.

Alternatively formulated, this aspect of the invention discloses a method for transmitting user specific data signals from at least one transmitting terminal with a spatial diversity means to at least two receiving terminals with a spatial diversity means. The method comprises the steps of:

- dividing the user data signals into a plurality of streams of sub-user data sub-signals,
- determining combined data signals in the transmitted signals, whereby the combined data signals are transformed versions of the streams of sub-user data sub-signals, such that at least one of said spatial diversity means of said receiving user terminals only receives data sub-signals being specific for the corresponding receiving user terminal. In normal operation 'at least one' should be understood as 'substantially all'.
- inverse subband processing the combined data signals,
- transmitting with the transmitting terminal spatial diversity means the inverse subband processed combined data signals,
- receiving on at least one of the spatial diversity receiving means of at least one of the receiving terminals received data signals,
- determining on at least one of said receiving terminals estimates of the specific user data sub-signals from the received data signals, and
- collecting said estimates of the data sub-signals into estimates of the data signals.

A transmit pre-filter in the base station is used, that achieves a block diagonalisation of the channel, resulting in a substantially zero multi-user interference. Each terminal then only has to eliminate its own inter-stream interference, which does not require information from the other users' channels. Within the invented method the vectors $V_i$ are selected such that the $M^u$ component signal vector received by the antennas of a particular remote transceiver substantially only contain signal contributions directly related to the Cu sub-signals of the original information signal that the remote transceiver should reconstruct. Determining combined data signals is essentially based on the distinct spatial signatures of the transmitted combined data signals (SDMA) and is such that the spatial diversity means of a terminal only receive the sub-data signals specific for the user of that terminal. This approach can be exploited in a multi-user SDMA MIMO TX-RX optimisation context, which results in a decoupling of this overall optimisation into several single user optimisations, where each optimisation only depends on a single-user MIMO channel. The close estimate of one of the $C^u$ independent information signals is constructed from the M component signal vector received at the related remote transceivers antenna array by using the steps of: selecting M component vectors $P_i$ and computing an $M^u$ component receive vector as a weighted sum of the $M^u$ component vectors $P_i$ wherein the components of the $M^u$ component signal vector are used as weighting coefficients. Thereafter the components of the obtained weighted sum are combined in order to obtain the required estimate. The vector $V_i$, $P_i$ can be determined in a joint MMSE optimisation scheme, independently for each remote terminal.

The transmission can be substantially simultaneous. The spectra of the (transmitted) inverse subband processed combined data signals can be at least partly overlapping.

In the downlink split scenario the determination of the data sub-signal estimates in the receiving terminals comprises subband processing (350). In the downlink concentrated scenario determining (250) combined data signals in the transmitting terminal comprises the following steps: (first step) determining intermediate combined data signals (290) by subband processing (280) the data sub-signals (210), and (second step) determining (270) the combined data signals from the intermediate combined data signals.

The uplink transmission methods for communication between U (>1) user terminals and a base station can be formalised as a second aspect of the invention. As in the downlink case a double level of spatial multiplexing is used (SDMA-SDM). The methods further involve the steps of pre-filtering in at least one of the transmitting user terminals and post-filtering in the base station. Substantially simultaneously $C=\Sigma C^u$ independent information signals are sent from the U user terminals to the base transceiver station, whereby, for each user terminal, the information Cu signals share the same conventional channel. Each of the user terminals have an array of $M^u$ (>1) transmit antennas (also defining a spatial diversity means), $M^u$ being terminal specific as each terminal may have different number of antennas. The base transceiver station has an array of N (>1) base station antennas (defining a spatial diversity means). The purpose of the method is that the base station be capable of determining a close estimate of the $C^u$ independent information signals, said estimate being constructed from a N component signal vector received at the base station antenna array. The invented method comprises the step of dividing each of the C independent signals into a plurality of streams of Cu sub-signals and computing a $M^u$-component transmission vector as a weighted sum of C $M^u$-component vectors wherein the sub-signals are used as weighting coefficients.

This aspect of the invention discloses a method of transmitting data signals from at least two transmitting terminals each provided with spatial diversity transmitting means to at least one receiving terminal with a spatial diversity receiving means comprising the steps of

- dividing said data signals into a plurality of streams of (sub-user) data sub-signals,
- transforming versions of said streams of said data sub-signals into transformed data signals,
- transmitting from said transmitting terminals said transformed data signals,
- receiving on said spatial diversity receiving means received data signals being at least function of at least two of said transformed data signals,
- subband processing of at least two of said received data signals in said receiving terminal,
- applying a linear filtering on said subband processed received data signals, said linear filtering and said transforming being selected such that the filtered subband processed received data signals are specific for one of said transmitting terminals,
- determining estimates of said data sub-signals from said filtered subband processed received data signals in said receiving terminal,
- collecting said estimates of said data sub-signals into estimates of said data signals. This step can comprise a joint detection operation step like a State Insertion Cancellation.


The transformed data signals can be transmitted substantially simultaneously. The spectra of the transformed data signals can be at least partly overlapping.

In the uplink split scenario the transformation of the data sub-signals (108) to transformed data signals (70) comprises inverse subband processing (160). In the uplink concentrated scenario the determination (150) of data sub-signal estimates from (the obtained) subband processed received data signals in the receiving terminal comprises the following steps: (first step) determining (100) intermediate estimates (130) of the data sub-signals from the subband processed received data signals in the receiving terminal; (second step) obtaining the estimates of the data sub-signals (120) by inverse subband processing (110) the intermediate estimates.

It is a characteristic of the invention that said transmission methods are not a straightforward concatenation of a Space Division Multiple Access technique and a multi-carrier modulation method. The disclosed methods for multi-user MIMO transmission are characterised in that a double level of spatial multiplexing is used: the users are spatially multiplexed (SDMA) and each user receives spatially multiplexed bit streams (SDM). Further said method involves the steps of pre-filtering in the transmitting station and post-filtering in at least one of said receive terminals.

In an embodiment of both the first and second aspect of the invention implements a multicarrier modulation technique. An example of such a multicarrier modulation technique uses IFFT as ISP and FFT as SP, and the modulation technique is called Orthogonal Frequency Multiplexing (OFDM) modulation. It can be stated that in the uplink transmission method that the subband processing is orthogonal frequency division demultiplexing. It can also be stated that in the uplink transmission method that the inverse subband processing is an orthogonal frequency division multiplexing. It can also be stated that in the downlink transmission method that the subband processing is orthogonal frequency division demultiplexing. It can also be stated that in the downlink transmission method that the inverse subband processing is orthogonal frequency division multiplexing.

In concentrated scenarios, the processing that is carried out in the processing peer on samples between SP (90) (280) and ISP (110) (260) is called subband domain processing (270) (100). In split scenarios, the processing that is carried out prior to ISP (160) (260) in the transmitting terminal(s) and after SP (90) (350) in the receiving terminal(s), is called subband domain processing (eg. (250)). With before is meant coming earlier in time during the transmission or the reception, and with after is meant coming later in time during the transmission or the reception. In concentrated scenarios, the signals (130) (140) (290) (300) between the SP and the ISP are called signals in subband domain representation. In split scenarios, the signals (50) (300) (200) before the ISP in the transmitting terminal(s) and the signals (360) (140) (120) after the SP in the receiving terminal(s) are called signals in a subband domain representation.

In an embodiment, the subband processing consists of Fast Fourier Transform (FFT) processing and the inverse subband processing consists of Inverse Fast Fourier Transform Processing. By FFT processing is meant taking the Fast Fourier Transform of a signal. By Inverse FFT processing is meant taking the Inverse Fast Fourier Transform of a signal.

In the invention the transmitted sequence is divided in data subsequences prior to transmission. The data subsequences correspond to subsequences that will be processed as one block by the subband processing means. In case of multipath conditions, a guard interval containing a cyclic prefix or postfix is inserted between each pair of data subsequences in the transmitting terminal(s). If multipath propagation conditions are experienced in the wireless communication resulting in the reception of non-negligible echoes of the transmitted signal and the subband processing means consist of (an) FFT and/or IFFT operation(s), this guard introduction results in the equivalence between convolution of the time-domain data signals with the time-domain channel response on the one hand and multiplication of the frequency-domain data-signals with the frequency-domain channel response on the other hand. The insertion of the guard intervals can occur in both concentrated and split scenarios. One can thus state that in an embodiment of the invention in a split scenario, the transmitting terminal(s) insert guard intervals containing a cyclic prefix or postfix between each pair of data subsequences after performing ISP on the data subsequences and before transmitting the data subsequences. In another embodiment of the invention in a concentrated scenario, the guard intervals are inserted in the transmitted sequence between each pair of data subsequences without performing ISP on the data subblocks in the transmitting terminal(s). This can be formalised as follows by stating that in the uplink transmission methods the transformation of the data signals to transmitted data signals further comprises guard interval introduction. The guard interval introduction can equally well be applied in the downlink transmission methods. Alternatively overlap and save techniques can be exploited also.

The terminal(s) disposing of the spatial diversity means dispose(s) of SP and/or ISP means that enable subband processing of the distinct samples of the spatial diversity sample. Also, it disposes of means for combinatory processing. By combinatory processing means is meant means that process data coming from subbands of the distinct samples in the spatial diversity sample. In the combinatory processing means, different techniques can be applied to retrieve or estimate the data coming from the different distinct terminals or to combine the data to be transmitted to distinct terminals. The invention discloses methods for performing the combinatory processing, both for uplink transmission and for downlink transmission.

Combinatory processing in the downlink relates to a communication situation whereby the peer disposing of spatial diversity means, which is called the processing peer, is transmitting signals to the composite peer, which embodies different terminals transmitting (at least partially simultaneous) so-called inverse subband processed combined data signals (having at least partially overlapping spectra). With determining (250) combined data signals (300) in the transmitting terminal in the downlink transmission method is meant the combinatory processing.

Combinatory processing in the uplink relates to a communication situation whereby the peer disposing of spatial diversity means, which is called the processing peer, is receiving signals from the composite peer, which embodies different terminals transmitting (at least partially simultaneous) transformed data signals (having at least partially overlapping spectra). With the determination of estimates of the data sub-signals (120) from the subband processed received data signals (140) in said receiving terminal in the uplink transmission method is meant the combinatory processing.

The downlink transmission methods are now discussed more in detail. Consider therefore a base station (BS) with A antennas and U simultaneous user terminals (UT) each having Bu ($M^u$) antennas. The BS simultaneously transmits several symbol streams towards the U UTs: C1 streams towards UT1, C2 streams towards UT2, and so on. Each user terminal $UT^u$ receives the mixture of all symbol streams and attempts to recover its own stream of Cu symbols. To this end, each UT must be fitted with a number of antennas $B^u$ greater than or equal to $C^u$ ($B^u \geq C^u$). This transmission scheme can be referred to as SDM-SDMA: SDMA achieves the user separation and SDM achieves the per-user stream separation. The model is for flat fading channels but it also applies to frequency selective channels with multi-carrier transmission (e.g. OFDM), where flat fading conditions prevail on each sub-carrier.

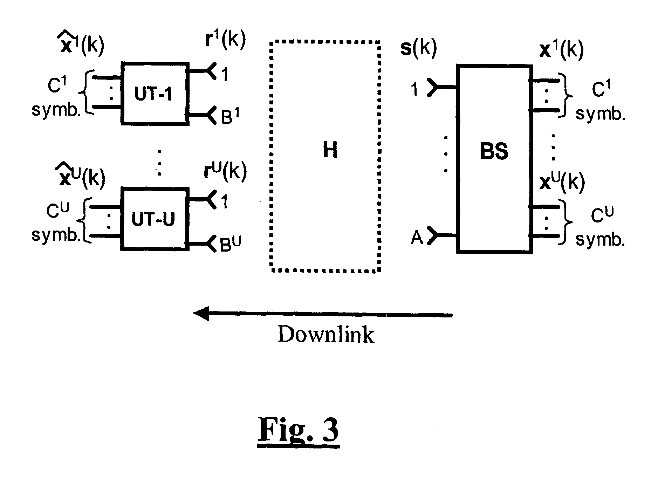

Figure 3 illustrates the set-up (the downlink transmission is illustrated from right to left). At each time instant k, the BS transmits the signal vector s(k) obtained by pre-filtering the symbol vector x(k), which itself results from stacking the U symbol vectors $x^u$(k) as follows (vectors are represented as boldface lowercase and matrices as boldface uppercase; the superscript T denotes transpose):

$$\mathbf{s}(k) = \begin{bmatrix} s_1(k) & \dots & s_A(k) \end{bmatrix}^T = \mathbf{F} \cdot \mathbf{x}(k)$$

$$\mathbf{x}(k) = \begin{bmatrix} \mathbf{x}^1(k)^T & \dots & \mathbf{x}^U(k)^T \end{bmatrix}^T \qquad \text{(formula 1)}$$

$$\mathbf{x}^u(k) = \begin{bmatrix} x_1^u(k) & \dots & x_{C^u}^u \end{bmatrix}^T$$

Assuming flat fading, the signal received by the $u^{th}$ terminal can be written as follows:

$$\mathbf{r}^u(k) = \mathbf{H}^u \cdot \mathbf{s}(k) + \mathbf{n}^u(k) \qquad \text{(formula 2)}$$

where $H^u$ are the $B^u$ rows of the full channel matrix H. In other words, $H^u$ is the MIMO sub-channel from the BS to user u. The full channel matrix H has dimension $\left( \sum_{u=1}^{U} B^u \right) \times A$ . Each user applies a linear post-filter $G^u$ to recover an estimate of the transmitted symbol vector $X^u(k)$:

$$\begin{aligned}\hat{\mathbf{x}}^u(k) &= \mathbf{G}^u \cdot \mathbf{r}^u(k) \\ &= \mathbf{G}^u \cdot \mathbf{H}^u \cdot \mathbf{F} \cdot \mathbf{x}(k) + \mathbf{G}^u \cdot \mathbf{n}^u(k)\end{aligned} \qquad \text{(formula 3)}$$

Note that x(k) contains the symbols of all U users, hence MUI can cause severe signal-to-noise ratio degradation if not properly dealt with.

In order to zero out the MUI, the F matrix is proposed to be designed such that it block diagonalises the channel i.e. the product H·F is block diagonal with the $u^{th}$ block in the diagonal being of dimension $B^u \times B^u$. This ensures that, under ideal conditions, the MUI is completely eliminated, leaving only per-user multi-stream interference, which will be tackled by a per-user processing

First, it is noticed that H is the vertical concatenation of the U "BS-to-user-u" matrices $H^u$ and F is the horizontal concatenation of the U pre-filtering matrices $F^u$:

$$\begin{aligned}\mathbf{H} &= \left[ \mathbf{H}^{1^T} \cdots \mathbf{H}^{U^T} \right]^T \\ \mathbf{F} &= \left[ \mathbf{F}^1 \cdots \mathbf{F}^U \right]\end{aligned} \qquad \text{(formula 4)}$$

The block-diagonalisation condition is fulfilled if each $F^u$ is chosen so that its columns lie in the null-space of $H_C^u$ where

$H_C^u$ is obtained by removing from H the $B^u$ rows corresponding to user u (so $HC^u$ has $\sum_{k=1, k\neq u}^{U} B^k$ rows) :

$$\mathbf{F}^u \in null\{\mathbf{H}_C^u\} \quad \Leftrightarrow \quad \mathbf{H}_C^u \cdot \mathbf{F}^u = \mathbf{O} \qquad \text{(formula 5)}$$

To achieve this, matrix N is introduced which is built as follows: $N^1$, the first columns of N, is an orthogonal basis for the null space of $H_C^1$; the other columns of N are built in the same way for user 2 to U: $N = [N^1 \ldots N^u]$ . It is easy to see that each $N^u$ has $D^u$ columns where $D^u$ is given by:

$$D^u = A - \sum_{k=1, k\neq u}^{U} B^k \qquad \text{(formula 6)}$$

Matrix F is defined as N·E where E is also block diagonal with blocks of dimension $B^u \times C^u$. This constrains F to use, per user u, a linear combination of $N^u$ which indeed block diagonalises the full channel matrix; these linear combinations are contained in the sub-blocks that make up the E matrix.

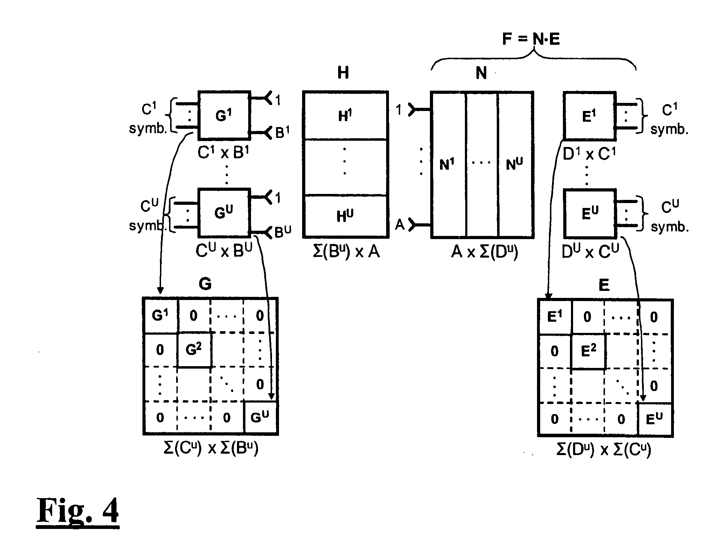

Matrix G is similarly designed as a block diagonal matrix where each block has dimension $C^u \times B^u$. Figure 4 illustrates the various matrices used together with their dimensions.

Globally, this strategy is very interesting because the pre- and post-filtering (F and G) can be calculated independently per user. Very importantly, zeroing the MUI is also attractive to combat near-far effects.

It can easily be shown that the requirements on the number of antennas are as follows:

$$B^u \geq C^u$$
$$\left. A - \sum_{k=1,\,k \neq u}^{U} B^k \geq C^u \right\} \quad \textit{for all } u \qquad \text{(formula 7)}$$

Within these limits, the scheme can accommodate terminals with different number of antennas, which is an additional interesting feature.

An existing joint TX-RX MMSE optimisation scheme is modified and extended to take the block diagonalisation constraint into account. To this end, the joint TX-RX optimisation per user is computed for a MUI free channel: the optimisation is performed over channel $H^u \cdot N^u$ for user u. One has the following constrained minimisation problem, with $P^u$ denoting the transmit power of user u and the superscript H the Hermitian transpose:

$$\min_{\mathbf{E}^u, \mathbf{G}^u} E\left[ \left\| \mathbf{x}^u(k) - \hat{\mathbf{x}}^u(k) \right\|_2^2 \right] \qquad s.t. \quad trace\!\left( \mathbf{F}^{uH} \mathbf{F}^u \right) = P^u$$

$$\min_{\mathbf{E}^u, \mathbf{G}^u} E\left[ \left\| \mathbf{x}^u(k) - \mathbf{G}^u\!\left( \mathbf{H}^u \mathbf{N}^u \mathbf{E}^u \mathbf{x}^u(k) + \mathbf{n}^u(k) \right) \right\|_2^2 \right] \qquad \text{(formula 8)}$$

$$s.t. \quad trace\!\left( \mathbf{E}^{uH} \mathbf{N}^{uH} \mathbf{N}^u \mathbf{E}^u \right) = P^u$$

The constrained optimisation is transformed into an unconstrained one using the Lagrange multiplier technique. Then, one must minimise the following Lagrangian:

$$L(\mu, \mathbf{E}^u, \mathbf{G}^u) =$$
$$E\left[ \left\| \mathbf{x}^u(k) - \mathbf{G}^u\!\left( \mathbf{H}^u \mathbf{N}^u \mathbf{E}^u \mathbf{x}^u(k) + \mathbf{n}^u(k) \right) \right\|_2^2 \right] \quad \text{(formula 9)}$$
$$+ \lambda^u \!\left( trace\!\left( \mathbf{E}^{uH} \mathbf{N}^{uH} \mathbf{N}^u \mathbf{E}^u \right) - P^u \right)$$

where $\lambda^u$ is a parameter that has to be selected to satisfy the power constraint. Following an approach similar to [H. Sampath, P. Stoica and A. Paulraj, "Generalised Linear Precoder and Decoder Design for MIMO Channels Using the Weighted MMSE Criterion", IEEE Transactions on Communications, Vol. 49, No. 12, December 2001] and using the singular value decomposition (SVD) of $H^u \cdot N^u$, one obtains the following transmit and receive filters $F^u$ and $G^u$, per user:

$$\mathbf{H}^u \mathbf{N}^u = \mathbf{U}_{HN}^u \Sigma_{HN}^u (\mathbf{V}_{HN}^u)^H$$
$$\left( \Sigma_E^u \right)^2 = \left( \frac{\sigma}{\sqrt{\lambda}} \left( \Sigma_{HN}^u \right)^{-1} - \sigma^2 \left( \Sigma_{HN}^u \right)^{-2} \right)_+ \qquad \text{(formula 10)}$$
$$\mathbf{F}^u = \mathbf{N}^u \mathbf{E}^u = \mathbf{N}^u \mathbf{V}_{HN}^u \Sigma_E^u$$
$$\mathbf{G}^u = \left( \Sigma_E^u \Sigma_{HN}^u \right)^{-1} \left( \mathbf{U}_{HN}^u \right)^H$$

where ( . )+ indicates that only the non-negative values are acceptable and, in the last line, only the non-zero values of the diagonal matrix are inverted.

To illustrate the performance of the proposed SDMA-MIMO scheme, a typical multi-user MIMO situation is considered first where a BS equipped with 6 to 8 antennas is communicating with three 2-antenna UTs. Hence, this set-up has 3x2=6 simultaneous symbol streams in parallel. The 3 input bit streams at the BS are QPSK modulated and demultiplexed into 2 symbol streams each. Each symbol stream is divided in packets containing 480 symbols and 100 channel realisations are generated. The entries of matrix H are zero mean iid gaussian random variables with variance 1 and are generated independently for each packet. The total transmit power per symbol period across all antennas is normalised to 1.

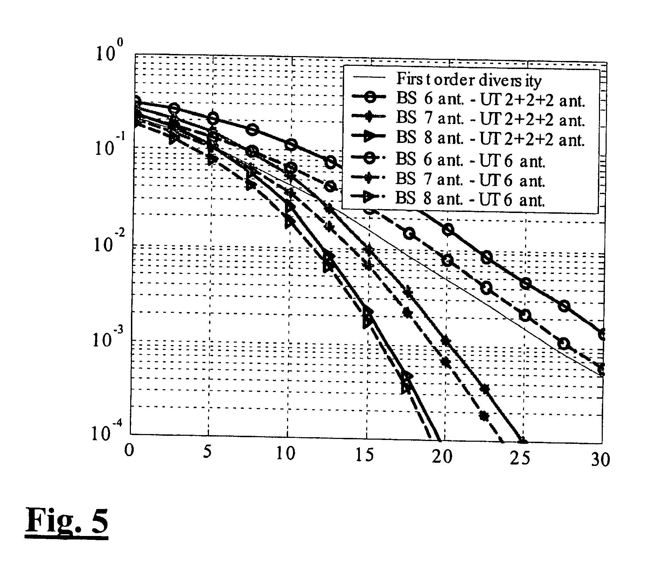

Figure 5 shows the performance of the proposed SDMA-MIMO system for the joint TX-RX MMSE design in solid line. Also shown in dotted line is the performance of a conventional single user MIMO system with the same number of antennas (6 to 8 antennas for the BS, 6 antennas for the UT). The scenario where the BS has 6 antennas is the fully loaded case: it is impossible to add more parallel streams without introducing irreducible MUI. The scenarios where the BS has more than 6 antennas are underloaded and some diversity gain is expected. The single user system has of course a better performance since it has more degrees of freedom available at the receiver for spatial processing (for the conventional case, the receive filter matrix is 6x6 while for our multi-user MIMO case the 3 receive filter matrices are 2x2). A very interesting feature of the proposed SDMA MIMO system is that adding just one antenna at the BS provides a diversity gain of 1 to all simultaneous users. Also, the difference between single user and multi-user performance becomes negligible when the number of BS antennas increases.

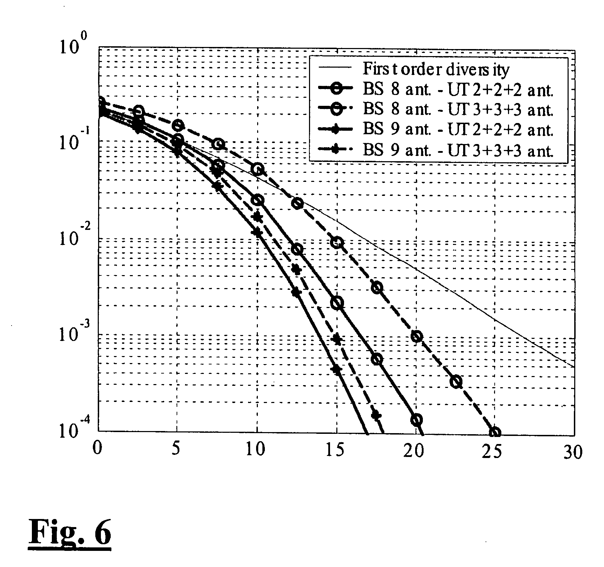

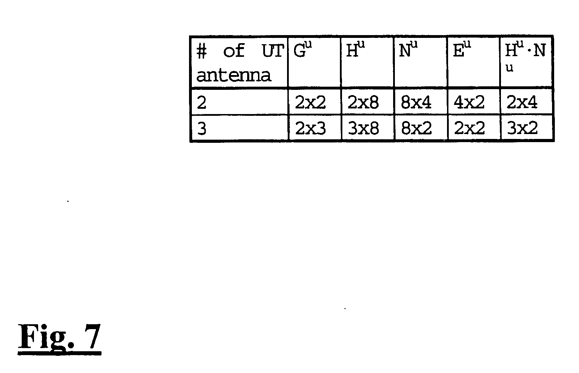

Next, the case is considered of an increased number of antennas at the user terminal. Two symbol streams are sent to each terminal and the terminals have 3 antennas (same number at each terminal). The BS has 8 or 9 antennas to satisfy the requirement in formula (7). For comparison, 2 antennas at the UTs has also been simulated. All other parameters are identical to those of the first simulation scenario. The simulation results are shown in Figure 6. As expected, increasing the number of BS antennas from 8 to 9 provides a diversity improvement. However, increasing the number of receive antennas results in a reduced performance. This counter-intuitive result is due to the fact that the higher number of receive antennas reduces the number of columns of N and, hence, the apparent channel dimension over which the MMSE optimisation takes place. More specifically, for 8 antennas at the BS, one has the matrix dimensions given in Figure 7. It can be seen that the actual channel ($H^U \cdot N^U$) available for per-user TX-RX MMSE optimisation is smaller when the number of RX antennas is large. It has been verified that the BER curves corresponding to these two cases match closely with the BER curves of joint TX-RX MMSE optimisation of a 2x4 and 3x2 MIMO system respectively, with a correction of $10\log_{10}(3) = 4.8$ dB. This correction is due to the power being divided between three users in this exemplary SDMA MIMO system.

An SDMA MIMO scheme was proposed that allows to block-diagonalise the MIMO channel so that the MUI is completely cancelled. It was applied to a joint TX-RX MMSE optimisation scheme with transmit power constraint. This design then results in smaller per user optimisation problems. The highest - and most economical - performance increase is shown to be achieved by increasing the number of antennas at the base station side. Increasing the number of antennas at the terminals beyond the number of parallel streams must be done carefully. This block diagonalisation is very attractive for MIMO-SDMA. In this context, it can be applied to a large range of schemes including linear and non-linear filtering and optimisations, TX-only, RX-only or joint TX-RX optimisation. It is also applicable for uplink and downlink. Extension to frequency selective channels is straightforward with multi-carrier techniques such as OFDM.

Consider an approach based on the assumption that the channel is slowly varying and hence channel state information can be acquired through either feedback or plain channel estimation in TDD-based systems and consider among the possible design criteria, the joint transmit and receive Minimum Mean Squared Error (Tx/Rx MMSE) criterion, for it is the optimal linear solution for fixed coding and modulation across the spatial subchannels. Note that the latter constraint is set to reduce the system's complexity and adaptation requirements in comparison to the optimal yet complex bit loading strategy. For a fixed number of spatial streams p and fixed symbol modulation, this design devises an optimal filter-pair **(T,R)** that decouples the MIMO channel into multiple parallel spatial subchannels. An optimum power allocation policy allocates power only to a selection of subchannels that are above a given Signal-to-Noise Ratio (SNR) threshold imposed by the transmit power constraint. Furthermore, more power is given to the weaker modes of the previous selection and vice versa. It is clear that the data-streams assigned to the non-selected spatial subchannels are lost, giving rise to a high MMSE and consequently a non-optimal Bit-Error Rate (BER) performance. Moreover, the arbitrary and initial choice of the number of streams $p$ leads to the use of weak modes that consume most of the power. The previous remarks show the impact of the choice of $p$ on the power allocation efficiency as well as on the BER performance of the joint Tx/Rx MMSE design. Hence, it is relevant to consider the number of streams $p$ as an additional design parameter rather than as a mere arbitrary fixed scalar

In this further aspect of the invention the issue is addressed of optimising the number of streams p of the joint Tx/Rx MMSE under fixed total average transmit power and fixed rate constraints for flat-fading MIMO channels in both a single user and multi-user context.

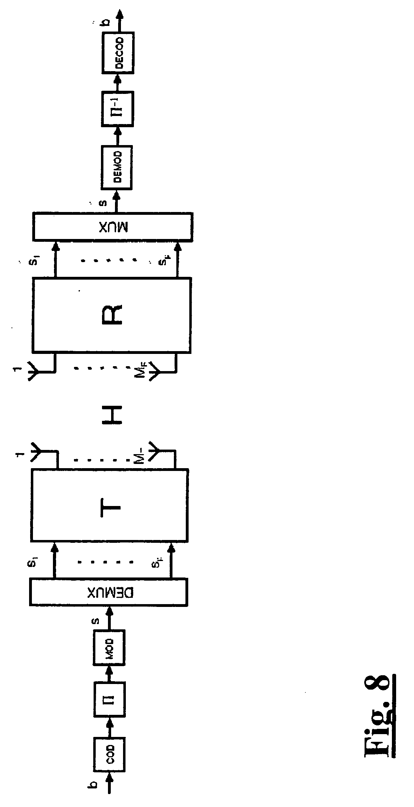

The considered point-to-point SM MIMO communication system is depicted in Figure 8. It represents a transmitter (Tx) and a receiver (Rx), both equipped with multiple antennas. The transmitter first modulates the transmit bit-stream $b$ according to a pre-determined modulation scheme (This implies the same symbol modulation scheme over all spatial substreams) then it demultiplexes the output symbols into $p$ independent streams. This spatial multiplexing modulation actually converts the serial symbol-stream $s$ into $p$ parallel symbol streams or equivalently into a higher dimensional symbol stream where every symbol now is a $p$-dimensional spatial symbol, for instance $s(k)$ at time $k$. These spatial symbols are then pre-filtered by the transmit filter **T** and sent onto the MIMO channel through the $M_T$ transmit antennas. At the receive side, the $M_R$ received signals are post-filtered by the receive -filter **R**. The $p$ output streams conveying the detected spatial symbols (*k*) are then multiplexed and demodulated to recover the initially transmitted bit-stream. For a flat-fading MIMO channel, the global system equation is given by

$$
\underbrace{\begin{bmatrix} \hat{s}_1(k) \\ \vdots \\ \hat{s}_p(k) \end{bmatrix}}_{\hat{\mathbf{s}}(k)} = \mathbf{R} \cdot \mathbf{H} \cdot \mathbf{T} \cdot \underbrace{\begin{bmatrix} s_1(k) \\ \vdots \\ s_p(k) \end{bmatrix}}_{\mathbf{s}(k)} + \mathbf{R} \cdot \underbrace{\begin{bmatrix} n_1(k) \\ \vdots \\ n_{M_R}(k) \end{bmatrix}}_{\mathbf{n}(k)}
\qquad \text{(formula 11)}
$$

where $\mathbf{n}(k)$ is the $M_R$-dimensional receive noise vector at time *k* and **H** is the ($M_R \times M_T$) channel matrix whose (i,j)$^{th}$ entry, $h^i_j$, represents the complex channel gain from the j$^{th}$ transmit antenna to the i$^{th}$ receive antenna. In the sequel, the sampling time index *k* is dropped for clarity.

The transmit and receive filters **T** and **R**, represented by a ($M_T \times p$) and ($p \times M_R$) matrix respectively, are jointly designed to minimise the Mean Squared Error (MMSE) subject to average total transmit power constraint as stated in:

$$
\begin{cases}
\text{Min}_{R,T} \qquad E\left\{ \left\| \mathbf{s} - (\mathbf{RHTs} + \mathbf{Rn}) \right\|_2^2 \right\} \\[2ex]
\text{subject to:} \qquad trace(\mathbf{TT}^H) = P_T
\end{cases}
\qquad \text{(formula 12)}
$$

The statistical expectation E{} is carried out over the data symbols *s* and noise samples *n*. Moreover, uncorrelated data symbols and uncorrelated zero-mean Gaussian noise samples with variance $\sigma_n^2$ are assumed so that one has

$$
E(\mathbf{ss}^H) = \mathbf{I}_p \qquad E(\mathbf{nn}^H) = \sigma_n^2 \mathbf{I}_{M_R} \qquad E(\mathbf{sn}^H) = 0
\qquad \text{(formula 13)}
$$

The trace constraint states that the average total transmit power per *p*-dimensional spatial symbol **s** after pre-filtering with **T** equals $P_T$.

Let $\mathbf{H} = \mathbf{U} \cdot \Sigma_{\mathbf{p}} \cdot \mathbf{V}^*$ be the Singular Value Decomposition (SVD) of the equivalent reduced channel corresponding to the *p* selected subchannels over which the p spatially multiplexed data-streams are to be conveyed. Considering the equivalent reduced channel corresponding to the p selected subchannels allows to reduce the later introduced St and Sr to their diagonal square principal matrices as one gets rid of their unused null-part corresponding to the (MR-p) remaining and unused subchannels. These *p* spatial subchannels are represented by $\Sigma_{\mathbf{p}}$ which is a diagonal matrix containing the first strongest *p* subchannels of the actual channel **H**. The optimisation problem stated in formula 12 is solved using the Lagrange multiplier technique and leads to the optimal filter-pair (**T,R**):

$$
\begin{cases}
\mathbf{T} = \mathbf{V} \cdot \Sigma_t \\
\mathbf{R} = \Sigma_r \cdot \mathbf{U}^H
\end{cases}
\qquad \text{(formula 14)}
$$

where $\Sigma_t$ is the ($p \times p$) diagonal power allocation matrix that determines the power distribution among the p spatial subchannels and is given by

$$
\begin{cases}
\Sigma_t^2 = \left[ \dfrac{\sigma_n}{\sqrt{\lambda}} \Sigma_p^{-1} - \sigma_n^2 \Sigma_p^{-2} \right]^+ \\[2ex]
\text{subject to:} \qquad trace(\Sigma_t^2) = P_T
\end{cases}
\qquad \text{(formula 15)}
$$

The complementary equalisation matrix $\Sigma_r$ is the (p × p) diagonal matrix given by:

$$\Sigma_r = \frac{\sqrt{\lambda}}{\sigma_n}\Sigma_t \qquad \text{(formula 16)}$$

where $[x]^+= \max(x,0)$ and $\lambda$ is the Lagrange multiplier to be calculated to satisfy the trace constraint of formula 15. The filter-pair MMSE solution $(\mathbf{T}, \mathbf{R})$ of formula 14 clearly decouples the MIMO channel matrix $\mathbf{H}$ into $p$ parallel subchannels. Among the latter available subchannels, only those above a given SNR threshold, imposed by the transmit power constraint, are allocated power as described in formula 15. Furthermore, more power is allocated to weaker modes of the previous selection and vice-versa leading to an asymptotic zero-forcing behaviour as subsequently shown:

$$\mathbf{RHT} = \left[\frac{\sigma_n}{\sqrt{\lambda}}\Sigma_p^{-1} - \sigma_n^2\Sigma_p^{-2}\right]\cdot\frac{\sqrt{\lambda}}{\sigma_n}\Sigma_p \rightarrow \mathbf{I}_p \quad \text{when} \quad \sigma_n \rightarrow 0 \quad \text{(formula 17)}$$

The discussed conventional Tx/Rx MMSE design is derived for a given number of streams p, which is arbitrary chosen and fixed. Hence, accuracy would require us to denote the filter-pair solution as $(\mathbf{T_p}, \mathbf{R_p})$. These $p$ streams will always be transmitted regardless of the power allocation policy that may, as previously explained, allocate no power to certain subchannels. The streams assigned to the latter subchannels are then lost contributing to a bad overall BER performance. Furthermore, as the SNR increases, these initially disregarded modes will eventually be selected and will monopolise most of the power budget leading to an inefficient power allocation solution. Both previous remarks highlight the influence of the choice of $p$ on the system performance and power allocation efficiency, hence the motivation to include $p$ as a design parameter in order to optimise the system performance.

For a fixed number of streams p and a fixed symbol modulation scheme across these streams, the optimal joint Tx/Rx MMSE solution, given by the filter-pair $(\mathbf{T_p}, \mathbf{R_p})$, gives rise the minimum Mean Squared Error $MSE_p$:

$$MSE_p = trace\left[\underbrace{\left(\mathbf{I}_p - \Sigma_t\Sigma_p\Sigma_r\right)^2}_{\text{imperfect equalization}} + \underbrace{\sigma_n^2\Sigma_r^2}_{\text{noise contribution}}\right] \qquad \text{(formula 18)}$$

which consists of two distinct contributions, namely the imperfect subchannel gain equalisation contribution and the noise contribution. It is an object of the invention to minimise $MSE_p$ with respect to the number of streams $p$ under a fixed rate constraint. The same symbol modulation scheme is assumed across the spatial substreams for a low-complexity optimal joint Tx/Rx MMSE design. This symbol modulation scheme, however, has to be adapted to $p$ to satisfy the fixed reference rate $R$. Hence, the constellation size corresponding to a given number of spatial streams p will be denoted $M_p$. Now, the proposed optimisation problem can be drawn:

$$\begin{cases} \underset{p}{Min} & E\{MSE_p\} \\ \text{subject to}: & p\times log2(M_p) = R \end{cases} \qquad \text{(formula 19)}$$

The resulting design $(p_{opt}, M_{opt}, \mathbf{T_{opt}}, \mathbf{R_{opt}})$ will be referred to as the *spatially optimised Joint Tx/Rx MMSE* design. For rectangular QAM constellations (i.e $E_s=2(M_p-1)/3$) , the constrained minimisation problem formulated in formula 19 reduces to:

$$\underset{p}{Min}\left\{trace\left[\frac{2}{3}(2^{R/p}-1)\left(\mathbf{I}_p - \Sigma_t\Sigma_p\Sigma_r\right)^2 + \sigma_n^2\Sigma_r^2\right]\right\} \qquad \text{(formula 20)}$$

The latter formulation suggests that optimal $p_{opt}$ is the number of spatial streams that enables a reasonable constellation size $M_{opt}$ while achieving the optimal power distribution that balances, on the one hand, the achieved SNR on the used subchannels and, on the other hand, the receive noise enhancement.

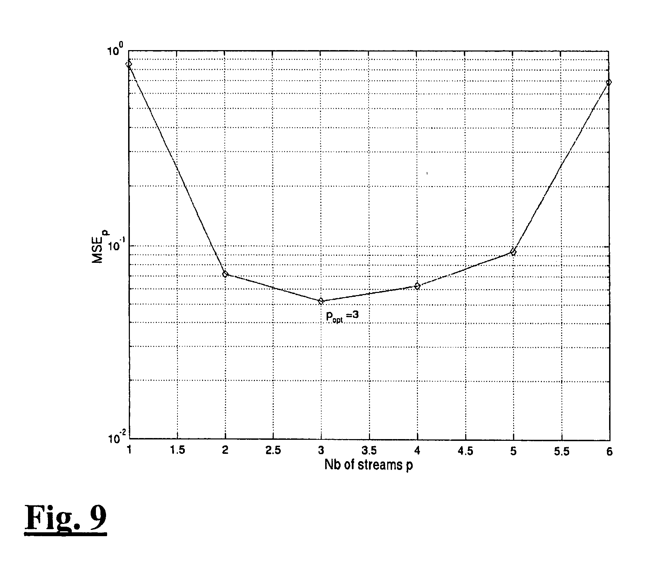

To illustrate the existence of $p_{opt}$, the optimisation problem of formula 20 is solved for a case-study MIMO set-up where $M_T=M_R=6$. An average total transmit power $P_T$ is assumed $P_T=1$, an average receive SNR=20 dB and a reference rate $R$=12 bits/channel use. Moreover, as for all the included simulations, the MIMO channel is considered to be stationary flat-fading and is modelled as a $M_R \times M_T$ matrix with i.i.d unit-variance zero-mean complex Gaussian entries. Moreover, perfect Channel State Information (CSI) is assumed at both transmitter and receiver sides. Figure 9 shows $p_{opt}$'s existence (a) and distribution (b) when evaluated over a large number of channel realisations.

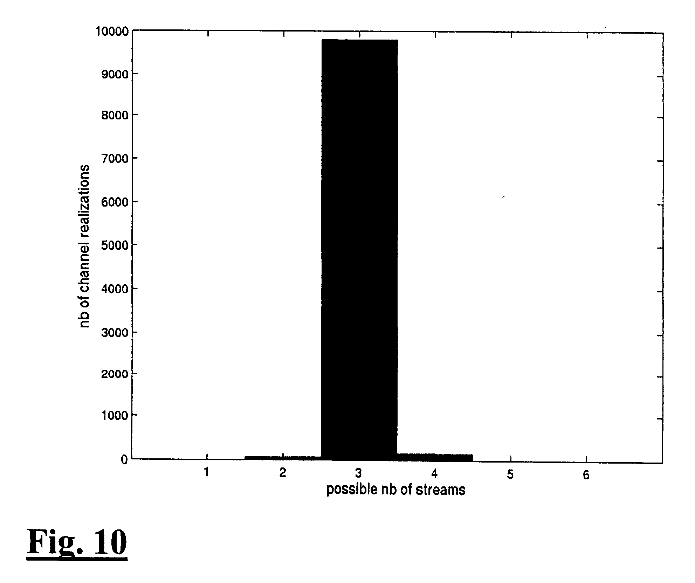

The reference rate $R$ certainly determines, for a given $(M_T, M_R)$ MIMO system, the optimal number of streams $p_{opt}$ as the MSEp explicitly depends on $R$ as clearly shown in formula 20. This is illustrated in Figure 10 where $p_{opt}$ clearly increases as the reference rate $R$ increases. Indeed, to convey a much higher rate $R$ at reasonable constellation sizes, a larger number of parallel streams is needed.

The dependence of $p_{opt}$ on the SNR is investigated. For a sample channel of the previous MIMO case study, Figure 10 depicts the system's $MSE_p$ for different SNR values. As expected, the $MSE_p$ globally diminishes as the SNR increases. The optimal number of streams $p_{opt}$, however, stays the same for the considered channel. This result is predictable since the noise power $\sigma_n^2$ is assumed to be the same on every receive antenna. In these circumstances, the power allocation matrix $\Sigma_t$ basically acts on the subchannel gains ($\sigma_p$) ($1 \leq p \leq \min(MT,MR)$) in $\Sigma_p$ trying to balance them while $\Sigma_r$ equalises these channel gains. Consequently, to convey a reference rate $R$ through a given $(M_T, M_R)$ MIMO channel using a transmit power $P_T$, there exists a unique $p_{opt}$ which is independent of the SNR. This allows us to assume the asymptotic high SNR situation when computing $p_{opt}$. In a high SNR situation, the power budget is sufficient for $\Sigma_t$ to select and allocate power to all p necessary modes as shown in formula 17. This allows us to find the expression of the Lagrange multiplier $\lambda$ and re-write formula 15 as follows

$$\begin{cases} \Sigma_t^2 = \dfrac{\sigma_n}{\sqrt{E_s\lambda}}\Sigma_p^{-1} - \dfrac{\sigma_n^2}{E_s}\Sigma_p^{-2} \\[2ex] \text{where}: \quad \lambda = \left(\dfrac{\sqrt{E_s}\sigma_n trace(\Sigma_p^{-1})}{P_T + \sigma_n^2 trace(\Sigma_p^{-2})}\right)^2 \end{cases} \quad \text{(formula 21)}$$

Using the previous expressions of $\Sigma_t$ and $\lambda$ and that of $\Sigma_r$ given in formula 16, the expression of $MSE_p$ reduces to:

$$MSE_p = \dfrac{E_s\sigma_n^2 trace(\Sigma_p^{-1})^2}{P_T + \sigma_n^2 trace(\Sigma_p^{-2})} \quad \text{(formula 22)}$$

For high SNRs, the second term in the denominator $\sigma_n^2$ trace $(\Sigma_p^{-2})$ is negligible compared to $P_T$. Furthermore, the noise level can be removed. Hence, a simplified error expression $Err_p$ can be drawn

$$Err_p = \dfrac{2}{3}(2^{R/p} - 1)\cdot trace(\Sigma_p^{-1})^2 \quad \text{(formula 23)}$$

The complex $MSE_p$ expression of formula 20, which depends on a large amount of parameters and which is composed of highly inter-dependent quantities, is reduced to a simplified expression $Err_p$ that preserves the same monotony and thus the same $p_{opt}$ as corroborated in Figure 8. The simplified $Err_p$, expressed in formula 23, is a product of only two terms each depending on a single system parameter namely the channel singular matrix $\Sigma_p$ and the reference rate $R$. The proposed simplified $Err_p$ clearly eases $p_{opt}$'s computation and more importantly does not require noise power estimation.

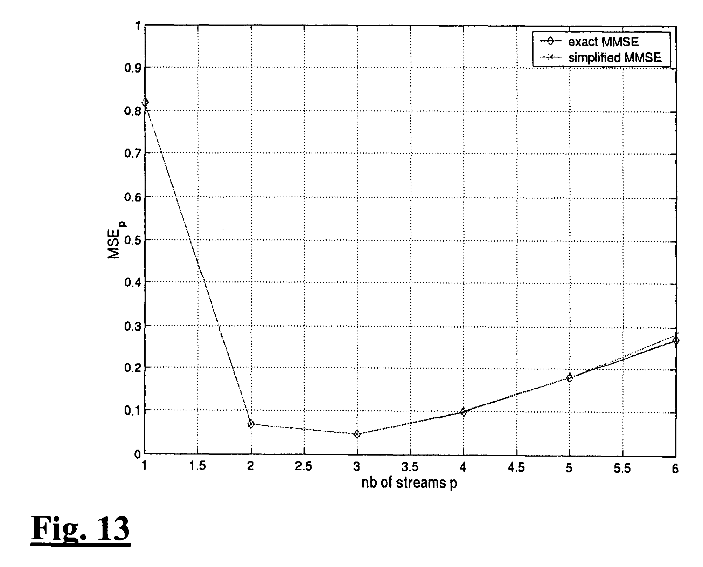

Previously, for every channel realisation the existence was exhibited of an optimal number of spatial streams $p_{opt}$ which minimises the system's $MMSE_p$. Consequently, a spatially optimised joint Tx/Rx MMSE design is proposed that adaptively determines and uses $p_{opt}$ and its corresponding constellation size $M_{opt}$. In this section, it is investigated how the proposed design bit error rate (BER) performance compares to those of the conventional joint Tx/Rx MMSE and the optimal spatial adaptive loading, where the number of spatial streams p is arbitrarily fixed. Figure 13 depicts the BER performance of the conventional joint Tx/Rx MMSE design for different fixed number of streams and that of our spatially optimised joint Tx/Rx MMSE for the case study (6,6) MIMO system. The optimised joint Tx/Rx MMSE offers a 10.4 dB SNR gain over full spatial multiplexing, where the maximum number of spatial streams is used $p$=min($M_T$,$M_R$), at BER=$10^{-2}$ and reference rate $R$ = 12 bits/channel use. Such a significant performance improvement is due to the combination of three reasons. First, the optimised joint Tx/Rx MMSE design is mostly using $p_{opt}$=3 as can be seen in Figure 9 which is lower than $p$=6 used in the full spatial multiplexing case. Reducing the number of used spatial streams allows a better exploitation of the system's spatial diversity what explains the observed higher curve slope. Second, reducing the number of used streams translates into a higher gain equivalent channel. Indeed, the optimised joint Tx/Rx MMSE design uses only the best $p_{opt}$ subchannels and discards the weak ones. Last but not least, the optimised constellation size $M_{opt}$ guarantees an optimal BER performance. The latter reason explains why the joint Tx/Rx MMSE design outperforms the conventional joint Tx/Rx MMSE design with fixed p=2 streams whereas the latter case better satisfies the previous reasons.

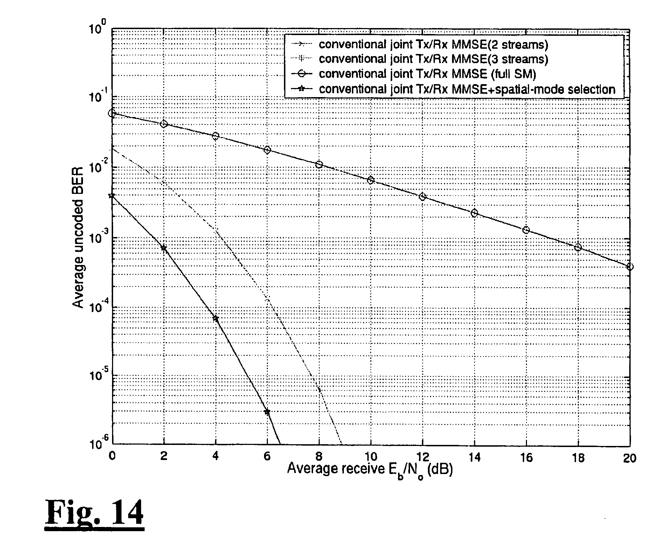

Furthermore, Figure 14 compares the BER performance of the spatially optimised joint Tx/Rx MMSE to that of the optimal joint Tx/Rx MMSE design for the previously considered MIMO set-up and different reference rates namely $R$= {12,18,24} bits per channel use. The *optimal joint Tx/Rx MMSE* refers to the design that adaptively (for every channel realisation) determines and uses the number of spatial streams $p$ and the constellation size $M_p$ that minimise the system BER under average total transmit power and rate constraints. Figure 14 also provides a lower BER bound corresponding to the optimal performance of spatial adaptive loading combined with MMSE detection. The loading algorithm used herein is the Fischer algorithm.

The spatially optimised design clearly exhibits the same average performance as the optimal MMSE. This suggests that the optimisation criterion, namely global MSE minimisation (formula 19), equivalently minimises the system's BER. Furthermore, the optimised joint Tx/Rx MMSE design exhibits less than 2 dB SNR loss at BER=$10^{-3}$ compared to the spatial adaptive loading. This performance difference is due to the fact that adaptive loading adapts not only the used number of streams but also the constellation sizes across these streams to achieve the lowest possible BER performance. The optimised joint Tx/Rx MMSE design assumes fixed constellations across the spatial streams to reduce the adaptation requirements and complexity. Finally, the optimised joint Tx/Rx MMSE appears to achieve the same diversity order as spatial adaptive loading, as their BER curves have the same slope.

The disclosed object of the invention, wherein the number of spatial streams used by the spatial multiplexing joint Tx/Rx MMSE design, are optimised, allows to better exploit the spatial diversity offered by MIMO systems and hence to significantly improve the system's BER performance. Based on that, the invention proposes a new spatially optimised joint Tx/Rx MMSE design. For a (6,6) MIMO set-up, the latter proposed design was shown to exhibit a 10.4 dB gain over the full spatial multiplexing conventional design for a BER = $10^{-2}$, a unit average total transmit power, a reference rate $R$=12 bits per channel use and i.i.d. channel. Furthermore, the optimality of the spatially optimised joint Tx/Rx MMSE is shown for fixed modulation across streams. Clearly, including the number of streams as a design parameter for spatial multiplexing MIMO systems can provide significant performance enhancement.

An alternative spatial-mode selection criterion targets the minimisation of the system BER, which is applicable for both uncoded and coded systems. This criterion examines the BERs on the individual spatial modes in order to identify the optimal number of spatial streams to be used for a minimum system average BER.

Both discussed conventional and even-MSE joint Tx/Rx MMSE designs have been derived for a given number of spatial streams $p$ which is arbitrarily chosen and fixed. These $p$ streams will always be transmitted regardless of the power allocation policy that may, as previously highlighted, allocate no power to certain weak spatial subchannels. The data streams assigned to the latter subchannels are then lost, leading to a poor overall bit error rate (BER) performance. Furthermore, as the SNR increases, these initially disregarded modes will eventually be given power and will monopolise most of the available transmit power, leading to an inefficient power allocation strategy that detrimentally impacts the strong modes. Finally, it has been shown that the spatial subchannel gains exhibit decreasing diversity orders. This means that the weakest used subchannel sets the spatial diversity order exploited by joint Tx/Rx MMSE design. The previous remarks highlight the influence of the choice of $p$ on the transmit power allocation efficiency, the exhibited spatial diversity order and thus on the joint Tx/Rx MMSE designs' bit error rate performance. Hence, it alternatively is proposed to include $p$ as a design parameter to be optimised according to the available channel knowledge for an improved system BER performance, what subsequently is referred to as *spatial-mode selection.* This approach is applicable for both uncoded and coded systems.

One wants to achieve a spatial-mode selection criterion that minimises the system's BER. In order to identify such criterion, we subsequently derive the expression of the conventional joint Tx/Rx MMSE design's average BER and analyse the respective contributions of the individual used spatial modes. For the used Gray-encoded square QAM constellations of size $M_P$ and minimum Euclidean distance $d_{min}$ = 2, the conventional joint Tx/Rx MMSE design's average BER across $p$ spatial modes, denoted $BER_{conv}$, is approximated by

$$BER_{conv} = \frac{2}{log_2(M_p)} \cdot \left(1 - \frac{1}{\sqrt{M_p}}\right) \cdot \frac{1}{p} \sum_{k=1}^{p} erfc\left(\sqrt{\frac{\sigma_k^2 \sigma_{Tk}^2}{\sigma_n^2}}\right) \qquad \text{(formula 24)}$$

where $\sigma_k$ denotes the $k^{th}$ diagonal element of $\Sigma_p$, which represents the $k^{th}$ spatial mode gain. Similarly, $\sigma_{Tk}$ is the $k^{th}$ diagonal element of $\Sigma_T$, whose square designates the transmit power allocated to the $k^{th}$ spatial mode. Hence, the argument $\frac{\sigma_k^2 \sigma_{Tk}^2}{\sigma_n^2}$ is easily identified as the average Signal-to-Noise Ratio (SNR) normalised to the symbol energy $E_s$, on the $k^{th}$ spatial mode. For a given constellation $M_p$, these average SNRs clearly determine the BER on their corresponding spatial modes. The conventional design's average BER performance, however, depends on the SNRs on all $p$ spatial modes as shown in formula (24). Consequently, to better characterise the conventional design's BER, we define the ($p \times p$) diagonal SNR matrix $\mathbf{SNR}_p$, whose diagonal consists of the average SNRs on the $p$ spatial modes:

$$\mathbf{SNR}_p = \frac{\Sigma_p^2 \cdot \Sigma_T^2}{\sigma_n^2} \qquad \text{(formula 25)}$$

Replacing the transmit power allocation matrix $\Sigma_T$ by its expression formulated in formula (21), the previous $\mathbf{SNR}_p$ expression can be developed into:

$$\mathbf{SNR}_p = \left[\frac{1}{\sigma_n\sqrt{\lambda E_s}}\Sigma_p - \frac{1}{E_s}\mathbf{I}_p\right]^+ \qquad \text{(formula 26)}$$

The latter expression illustrates that the conventional joint Tx/Rx MMSE design induces uneven SNRs on the different $p$ spatial streams. More importantly, formula (26) shows that the weaker the spatial mode is, the lower its experienced SNR. Since, the conventional joint Tx/Rx MMSE BER, $BER_{conv}$, of formula (24) can be rewritten as follows:

$$BER_{conv} = \frac{2}{log_2(M_p)} \cdot \left(1 - \frac{1}{\sqrt{M_p}}\right) \cdot \frac{1}{p} \sum_{k=1}^{p} erfc\left(\sqrt{\mathbf{SNR}_p(k,k)}\right) \qquad \text{(formula 27)}$$

The previous SNR analysis further indicates that the $p$ spatial modes exhibit uneven BER contributions and that that of the weakest $p^{th}$ mode, corresponding to the lowest SNR $\mathbf{SNR}_p(p,p)$, dominates $BER_{conv}$. Consequently, in order to minimise $BER_{conv}$, we propose as the optimal number of streams to be used, $p_{opt}$ the one that maximises the SNR on the weakest used mode under a fixed rate $R$ constraint. The latter proposed spatial-mode selection criterion can be expressed:

$$\begin{cases} \text{Max}_p \quad \mathbf{SNR}_p(p,p) \\ \\ \text{subject to:} \quad p \times log_2(M_p) = R \end{cases} \qquad \text{(formula 28)}$$

The rate constraint shows that, though the same symbol constellation is used across spatial streams, the selection/adaptation of the optimal number of streams $p_{opt}$ requires the joint selection/adaptation of the used constellation size $M_{opt}$. Using formula (26) for the considered square QAM constellations (i.e $E_s = 2(M_p - 1)/3$), the spatial-mode selection criterion stated in formula (24) can be further refined into:

$$BER_{conv} = \frac{2}{log_2(M_p)} \cdot \left(1 - \frac{1}{\sqrt{M_p}}\right) \cdot \frac{1}{p} \sum_{k=1}^{p} erfc\left(\sqrt{\mathbf{SNR}_p(k,k)}\right) \qquad \text{(formula 27)}$$

The previous SNR analysis further indicates that the $p$ spatial modes exhibit uneven BER contributions and that that of the weakest $p^{th}$ mode, corresponding to the lowest SNR $\mathbf{SNR}_p(p,p)$, dominates $BER_{conv}$ ·Consequently, in order to minimise $BER_{conv}$, we propose as the optimal number of streams to be used, $p_{opt}$, the one that maximises the SNR on the weakest used mode under a fixed rate $R$ constraint. The latter proposed spatial-mode selection criterion can be expressed:

$$\begin{cases} \text{Max}_p & \mathbf{SNR}_p(p,p) \\ \text{subject to}: & p \times log_2(M_p) = R \end{cases} \qquad \text{(formula 28)}$$

The rate constraint shows that, though the same symbol constellation is used across spatial streams, the selection/adaptation of the optimal number of streams $p_{opt}$ requires the joint selection/adaptation of the used constellation size $M_{opt}$. Using formula (26) for the considered square QAM constellations (i.e $E_s = 2(M_p - 1)/3$), the spatial-mode selection criterion stated in formula (28) can be further refined into:

$$p_{opt} = \text{argMax}_p \left[ \frac{1}{\sigma_n \sqrt{\frac{2}{3}(2^{R/p}-1)\lambda}} \sigma_p - \frac{1}{\frac{2}{3}(2^{R/p}-1)} \right]^+ \qquad \text{(formula 29)}$$

The latter spatial-mode selection problem has to be solved for the current channel realisation to identify the optimal pair $\{p_{opt}, M_{opt}\}$ that minimises the system's average BER, $BER_{conv}$.

A spatial-mode selection was derived based on the conventional joint Tx/Rx MMSE design because this design represents the core transmission structure on which the even-MSE design is based. Our strategy is to first use our spatial-mode selection to optimise the core transmission structure $\{\Sigma_T, \Sigma_{p_{opt}}, \Sigma_R\}$, the even-MSE then additionally applies the unitary matrix **Z**, which is now a $p_{opt}$-tap IFFT, to further balance the MSEs and the SNRs across the used $p_{opt}$ spatial streams.

A key element in the method described above is the block diagonalisation concept, which is to be realised by carefully determining the matrices F and G. Indeed, the pre-filtering at the base station allows to pre-compensate the channel phase (and amplitude) in such a way that all simultaneous users receive their own signal free of MUI. Obviously, this technique requires quasi-perfect downlink channel knowledge, which can be acquired during the uplink or during the downlink and fed back by signalling. From the point of view of minimising the signalling overhead and resistance to channel time-variations, the former approach is preferred. One starts from the assumption that the channel is reciprocal, so that the downlink channel matrix is simply the transpose of the uplink channel matrix.

However, the 'channel' is actually made up of several parts: the propagation channel (the medium between the antennas), the antennas and the transceiver RF, IF and baseband circuits at both sides of the link. The transceiver circuits are usually not reciprocal and this can jeopardise the system performance.

To describe the proposed solution a system with a multi-antenna base station and a single antenna terminal is considered. Note however that the extension to a full MIMO scenario (multi-antenna base station and a multi-antenna terminal) is straightforward.

In the uplink, U user mobile terminals transmit simultaneously to a BS using A antennas. Each user u employs conventional OFDM modulation with N sub-carriers and cyclic prefix of length P. Each user signal is filtered, up-converted to RF, and transmitted over the channel to the BS. Each BS antenna collects the sum of the U convolutions and AWGN noise. In each antenna branch, the BS then down-converts and filters the signals, removes the cyclic prefix and performs direct Fourier transform, which yields the frequency domain received signals $\mathbf{y}_a[n]$. If the cyclic prefix is sufficiently large and with proper carrier and symbol synchronisation, the BS observes the linear channel convolutions as cyclic and the following linear frequency domain model results on each sub-carrier n:

$$\begin{bmatrix} y_1[n] \\ \vdots \\ y_A[n] \end{bmatrix} = \begin{bmatrix} h_{11}[n] & \cdots & h_{1U}[n] \\ \vdots & & \vdots \\ h_{A1}[n] & \cdots & h_{AU}[n] \end{bmatrix} \bullet \begin{bmatrix} x_1[n] \\ \vdots \\ x_U[n] \end{bmatrix} + \begin{bmatrix} n_1[n] \\ \vdots \\ n_A[n] \end{bmatrix} \qquad \text{(formula 30)}$$

$$\underbrace{\phantom{xxx}}_{\mathbf{y}^{UL}[n]} \qquad \underbrace{\phantom{xxxxxxxx}}_{\mathbf{H}^{UL}[n]} \qquad \underbrace{\phantom{xx}}_{\mathbf{x}^{UL}[n]} \quad \underbrace{\phantom{xx}}_{\mathbf{n}[n]}$$

where $\mathbf{x}^{UL}[n]$ is the column vector of the U frequency domain symbols at sub-carrier n transmitted by the terminals, $\mathbf{y}^{UL}[n]$ is the column vector of the A signals received by the BS antenna branches, and $\mathbf{H}^{UL}$ is the composite uplink channel: In the sequel, the explicit dependency on [n] is dropped for clarity.

Including the terminal transmitters and the BS receiver, $\mathbf{H}^{UL}[n]$ can be expressed as:

$$\mathbf{H}^{UL} = \mathbf{D}_{RX,BS} \cdot \mathbf{H} \cdot \mathbf{D}_{TX,MT} \qquad \text{(formula 31)}$$

where $\mathbf{D}_{RX,BS}$ and $\mathbf{D}_{TX,MT}$ are complex diagonal matrices containing respectively the BS receiver and mobile terminal transmitters frequency responses (throughout the paper, we use the letter $\mathbf{D}$ to emphasise that the matrices are diagonal). The matrix $\mathbf{H}$ contains the propagation channel itself, which is reciprocal. In order to recover the transmitted symbols, the BS uses a channel estimation algorithm that provides the estimate $\hat{\mathbf{H}}^{UL}$ affected by $\mathbf{D}_{RX,BS}$ and $\mathbf{D}_{TX,MT}$.

For the downlink, SDMA separation is achieved by applying a per-carrier pre-filter that pre-equalises the channel. This pre-filtering is contained in the $\mathbf{F}^{DL}$ matrix of the frequency domain linear model:

$$\mathbf{y}^{DL} = \mathbf{H}^{DL} \cdot \mathbf{F}^{DL} \cdot \mathbf{D}_{p} \cdot \mathbf{x}^{DL} + \mathbf{n} \qquad \text{(formula 32)}$$

where $\mathbf{x}^{DL}$ is the column vector of the U symbols transmitted by the BS, $\mathbf{y}^{DL}$ is the column vector of the U signals received by the terminals, $\mathbf{D}_p$ is an optional power scaling diagonal matrix and $\mathbf{H}^{DL}$ is the composite downlink channel. $\mathbf{H}^{DL}$ is also affected by the BS and terminals hardware:

$$\mathbf{H}^{DL} = \mathbf{D}_{RX,MT} \cdot \mathbf{H}^{T} \cdot \mathbf{D}_{TX,BS} \qquad \text{(formula 33)}$$

where $\mathbf{D}_{TX,BS}$ and $\mathbf{D}_{RX,MT}$ are complex diagonal matrices containing respectively the BS transmitter and mobile terminal receivers frequency responses and $\mathbf{H}^{T}$ is the transpose of $\mathbf{H}$, the uplink propagation channel; clearly, one can use $\mathbf{H}^{T}$ for the downlink if the downlink transmission occurs without significant delay after the uplink channel estimation, compared to the coherence time of the channel. In what follows, the channel is assumed to be static or slowly varying, which is a valid assumption for indoor WLAN channels.

For the channel inversion strategy, the pre-filtering matrix is the inverse (or pseudo-inverse if U<A) of the transpose of the uplink channel matrix so that, ideally, the product of the pre-filtering matrix and the downlink channel matrix is the identity matrix. Assuming perfect channel estimation, one can substitute $\mathbf{H}_{UL}$ to $\hat{\mathbf{H}}_{UL}$ and express $\mathbf{F}^{DL}$ as:

$$\mathbf{F}^{DL} = \left(\hat{\mathbf{H}}^{UL}\right)^{-T} \cong \left(\mathbf{H}^{UL}\right)^{-T} = \left(\mathbf{D}_{RX,BS} \cdot \mathbf{H} \cdot \mathbf{D}_{TX,MT}\right)^{-T} \qquad \text{(formula 34)}$$

Finally, replacing $\mathbf{F}^{DL}$ and $\mathbf{H}^{DL}$ in the downlink linear system model (formula 32), the received downlink signal per sub-carrier becomes:

$$\mathbf{y}^{DL} = \underbrace{\mathbf{D}_{RX,MT}\mathbf{H}^{T}\mathbf{D}_{TX,BS}}_{\mathbf{H}^{DL}} \cdot \underbrace{\mathbf{D}_{RX,BS}^{-1}\mathbf{H}^{-T}\mathbf{D}_{TX,MT}^{-1}}_{\mathbf{F}^{DL}=\left(\mathbf{H}^{UL}\right)^{-T}} \cdot \underbrace{\mathbf{D}_{P}}_{\text{Power}} \cdot \mathbf{x}^{DL} + \mathbf{n} \qquad \text{(formula 35)}$$

Note that, the introduction of $\mathbf{D}_p$ allows this model to support other downlink strategies such as channel orthogonalisation and, more generally, power control in the downlink.

The linear model presented before lends itself to several useful interpretations and highlights the origin of the MUI:

- The effect of channel pre-filtering is altered by the two diagonal matrices appearing between $\mathbf{H}^T$ and $\mathbf{H}^{-T}$. Interestingly, this is solely due to transceiver effects at the BS. What causes MUI is the BS non-reciprocity: $\mathbf{D}_{TX,BS} \cdot (\mathbf{D}_{RX,BS})^{-1}$ is not equal to the identity matrix multiplied by a scalar, *although this product is diagonal.* However, the identity matrix, multiplied by an arbitrary complex scalar could be "inserted" between $\mathbf{H}^T$ and $\mathbf{H}^{-T}$ without causing MUI.

- The terminal front-end effects ($\mathbf{D}_{TX,MT}$ and $\mathbf{D}_{RX,MT}$) do not contribute to MUI. However, even with perfect BS reciprocity, $\mathbf{D}_{TX,MT}$ and $\mathbf{D}_{RX,MT}$ will result in scaling and rotation of the constellations received at the UT, which imposes the use of an equaliser at the UT. The power scaling matrix $\mathbf{D}^P$ also contributes to amplitude modifications that must be equalised at the terminal. Note that the terminal equaliser is a conventional time-only equaliser (as opposed to space-time equalisers). This equaliser is also needed to compensate the unknown phase of the base station RF oscillator at TX time.

- The propagation matrix $\mathbf{H}$ in this model also includes the parts of the BS or terminals that are common to uplink and downlink, hence reciprocal. This is the case for the antennas and for any common component inserted between the antenna and the Tx/Rx switch (or circulator).

## Claims

1. A method of transmitting data signals (200) from at least one transmitting terminal (240) with a spatial diversity means (220) to at least two receiving user terminals (330), each provided with spatial diversity receiving means (320), comprising the steps of

   • dividing (205) said data signals (200) into a plurality of streams of data sub-signals (210),
   • determining (250) combined data signals (300) in said transmitting terminal, said combined data signals being versions of said streams of data sub-signals (210) transformed transmitter filtering step by a user so designed that at least one of said spatial diversity means (320) of said receiving user terminals only receives data sub-signals being specific for the corresponding receiving user terminal and having interference between at least two streams of said plurality of streams of data sub-signals, said transmitter filtering step user being specific for said corresponding receiving user terminal,
   • inverse subband processing (260) said combined data signals (300),
   • transmitting with said spatial diversity means (220) said inverse subband processed combined data signals,
   • receiving on at least one of said spatial diversity receiving means (320) of at least one of said receiving user terminals (330) received data signals, being at least function of said inverse subband processed combined data signals,
   • determining on at least one of said receiving user terminals (330) estimates of said data sub-signals from said received data signals,
   • eliminating on said at least one receiving user terminal said interference between said at least two streams of said estimates of said data sub-signals, and
   • collecting said estimates of said data sub-signals into estimates of said data signals.

2. The method recited in claim 1, wherein said transmission of said inverse subband processed combined data signals is performed in an at least partially simultaneous way.

3. The method recited in claim 1, wherein the spectra of said inverse subband processed combined data signals are at least partly overlapping.

4. The method recited in claim 1, wherein the step of determining combined data signals in said transmitting terminal is carried out on a subband by subband basis.

5. The method recited in claim 1, wherein the step of determining said estimates of said data sub-signals in said receiving terminals comprises subband processsing (350).

6. The method recited in claim 1, wherein the step of determining combined data signals in said transmitting terminal comprises the steps:

• determining intermediate combined data signals (290) by subband processing (280) said data signals,
• determining (270) said combined data signals from said intermediate combined data signals.

7. The method recited in claim 5 and 6, wherein said subband processing is orthogonal frequency division demultiplexing.

8. The method recited in claim 1, wherein said inverse subband processing is orthogonal frequency division multiplexing.

9. The method recited in claim 1, wherein:

• said subbands, being involved in inverse subband processing, are grouped into sets, at least one set comprising of at least two subbands,
• the step of determining (250) combined data signals (300) in said transmitting terminal (240) comprises the steps of:

- determining relations between said data signals and said combined data signals on a set-by-set basis; and
- exploiting said relations between said data signals and said combined data signals for determining said data signals.

10. The method recited in claim 1, wherein in said inverse subband processed combined data signals a guard interval is introduced.

11. The method recited in claim 1, wherein the step of determining estimates of said sub-signals comprises a receiver filtering step, said transmitter filtering step and said receiver filtering step being determined on a user-per-user basis.

12. The method recited in claim 1, wherein the number of said streams of data sub-signals is variable.

13. The method recited in claim 1, wherein the number of said streams is selected in order to minimise the error between said estimates of said data sub-signals and said data sub-signals themselves.

14. The method recited in claim 1, wherein the number of said streams is selected in order to minimise the system bit error rate.

15. A method of transmitting data signals (50) from at least two transmitting terminals (20) each provided with spatial diversity transmitting means (60) to at least one receiving terminal (40) with a spatial diversity receiving means (80) comprising the steps of

• dividing (105) said data signals (50) into a plurality of streams of data sub-signals (108),
• transforming versions of said streams of said data sub-signals (108) into transformed data signals (70),
• transmitting from said transmitting terminals (20) said transformed data signals (70),
• receiving on said spatial diversity receiving means (80) received data signals being at least function of at least two of said transformed data signals (70),
• subband processing (90) of at least two of said received data signals in said receiving terminal (40),
• applying a linear filtering (95) on said subband processed received data signals, said linear filtering and said transforming being selected such that the filtered subband processed received data signals are specific for one of said transmitting terminals and have interference between at least two streams of said plurality of streams of data sub-signals,
• determining (150) estimates of said data sub-signals (120) from said filtered subband processed received data signals (140) in said receiving terminal,
• eliminating on said receiving terminal said interference between said at least two streams of said estimates of said data sub-signals, and
• collecting said estimates of said data sub-signals into estimates of said data signals.

16. The method recited in claim 15, wherein said transmission is at least partially simultaneous.

17. The method recited in claim 15, wherein the spectra of said transformed data signals are at least partly overlapping.

18. The method recited in claim 15, wherein said transformation of said data sub-signals (50) to transformed data sub-signals (70) comprises the step of inverse subband processing (150).

19. The method recited in claim 15, wherein the step of determining (150) estimates of said data sub-signals from subband processed received data signals in said receiving terminal comprises the steps of:

- determining (100) intermediate estimates of said data sub-signals (130) from said subband processed received data signals in said receiving terminal,
- obtaining said estimates of said data sub-signals (120) by inverse subband processing (110) said intermediate estimates.

20. An apparatus for transmitting inverse subband processed combined data signals to at least two receiving user terminals with spatial diversity means comprising at least :

• at least one spatial diversity transmitting means,
• circuitry being adapted for dividing data signals into streams of data sub-signals,
• circuitry being adapted for combining the data signals, comprising a filter so designed that at least one of said spatial diversity means of said receiving user terminals only receives data sub-signals being specific for the corresponding receiving user terminal and having interference between at least two streams of data sub-signals,
• circuitry being adapted for inverse subband processing combined data signals,
• circuitry being adapted for transmitting inverse subband processed combined data signals with said spatial diversity means.

21. The apparatus recited in claim 20, wherein said circuitry being adapted for combining data signals comprising a plurality of circuits each being adapted for combining data signals based on part of the subbands of said data sub-signals.

22. The apparatus recited in claim 20, wherein said spatial diversity transmitting means comprises at least two transmitting means and said circuitry being adapted for transmitting inverse subband processed combined data signals comprises a plurality of circuits each being adapted for transmitting said inverse subband processed combined data signals with one of said transmitting means of said spatial diversity means.

23. An apparatus for transmitting data signals to at least two receiving user terminals with spatial diversify means, comprising at least :

• at least one spatial diversity transmitting means,
• circuitry being adapted for dividing data signals into streams of data sub-signals,
• circuitry being adapted for transforming versions of said streams of data sub-signals,
• circuitry being adapted for transmitting with spatial diversity means said transformed versions of said streams of data sub-signals, comprising a filter so designed that at least one of said spatial diversity means of said receiving user terminals only receives data sub-signal being specific for the corresponding receiving user terminal and having interference between at least two streams of data sub-signals.

**Patentansprüche**

1. Verfahren zum Senden von Datensignalen (200) von mindestens einem Sendeterminal (240) mit einem Raumdiversitätsmittel (220) an mindestens zwei Benutzerempfangsterminals (330), die jeweils mit Empfangsmitteln mit Raumdiversität (320) versehen sind, umfassend folgende Schritte:

Unterteilen (205) der Datensignale (200) in eine Vielzahl von Strömen von Datenteilsignalen (210),
Bestimmen (250) kombinierter Datensignale (300) in dem Sendeterminal, wobei die kombinierten Datensignale Versionen der Ströme von Datenteilsignalen (210) sind, die durch einen Filterungsschritt des Senders umgewandelt werden, der derart ausgelegt ist, dass mindestens eines der Raumdiversitätsmittel (320) der Benutzerempfangsterminals nur Datenteilsignale empfängt, die für den entsprechenden Benutzerempfangsterminal spezifisch sind und eine Störung zwischen mindestens zwei Strömen der Vielzahl von Strömen von Datenteilsignalen aufweist, wobei der Filterungsschritt des Senders für den entsprechenden Benutzerempfangsterminal spezifisch ist,
umgekehrtes Teilbandverarbeiten (260) der kombinierten Datensignale (300),

Senden mit dem Raumdiversitätsmittel (220) der umgekehrt teilbandverarbeiteten kombinierten Datensignale, Empfangen an mindestens einem der Raumdiversitätsmittel (320) mindestens eines der Benutzerempfangsterminals (330) von empfangenen Datensignalen, die zumindest eine Funktion der umgekehrt teilbandverarbeiteten kombinierten Datensignale sind,

Bestimmen an mindestens einem der Benutzerempfangsterminals (330) von Schätzungen der Datenteilsignale aus den empfangenen Datensignalen,

Beseitigen an dem mindestens einen Benutzerempfangsterminal der Störung zwischen den mindestens zwei Strömen der Schätzungen der Datenteilsignale, und

Zusammenfassen der Schätzungen der Datenteilsignale zu Schätzungen der Datensignale.

**2.** Verfahren nach Anspruch 1, wobei das Senden der umgekehrt teilbandverarbeiteten kombinierten Datensignale auf mindestens teilweise gleichzeitige Art und Weise erfolgt.

**3.** Verfahren nach Anspruch 1, wobei die Spektren der umgekehrt teilbandverarbeiteten kombinierten Datensignale sich mindestens teilweise überdecken.

**4.** Verfahren nach Anspruch 1, wobei der Schritt des Bestimmens kombinierter Datensignale in dem Sendeterminal teilbandmäßig ausgeführt wird.

**5.** Verfahren nach Anspruch 1, wobei der Schritt des Bestimmens der Schätzungen der Datenteilsignale in den Empfangsterminals eine Teilbandverarbeitung (350) umfasst.

**6.** Verfahren nach Anspruch 1, wobei der Schritt des Bestimmens der kombinierten Datensignale in dem Sendeterminal folgende Schritte umfasst:

Bestimmen von dazwischenliegenden kombinierten Datensignalen (290) durch Teilbandverarbeitung (280) der Datensignale,

Bestimmen (270) der kombinierten Datensignale aus den dazwischenliegenden kombinierten Datensignalen.

**7.** Verfahren nach Anspruch 5 und 6, wobei die Teilbandverarbeitung ein orthogonales Mehrfachzugriffsverfahren ist.

**8.** Verfahren nach Anspruch 1, wobei die umgekehrte Teilbandverarbeitung ein orthogonales Mehrfachzugriffsverfahren ist.

**9.** Verfahren nach Anspruch 1, wobei:

die Teilbänder, die von der umgekehrten Teilbandverarbeitung betroffen sind, in Gruppen eingeteilt werden, wobei mindestens eine Gruppe aus mindestens zwei Teilbändern besteht,

der Schritt des Bestimmens (250) kombinierter Datensignale (300) in dem Sendeterminal (240) folgende Schritte umfasst:

gruppenmäßiges Bestimmen von Beziehungen zwischen den Datensignalen und den kombinierten Datensignalen; und

Ausnutzen der Beziehungen zwischen den Datensignalen und den kombinierten Datensignalen zum Bestimmen der Datensignale.

**10.** Verfahren nach Anspruch 1, wobei in den umgekehrt teilbandverarbeiteten kombinierten Datensignalen ein Schutzintervall eingeführt wird.

**11.** Verfahren nach Anspruch 1, wobei der Schritt des Bestimmens von Schätzungen der Teilsignale einen Filterungsschritt des Empfängers umfasst, wobei der Filterungsschritt des Senders und der Filterungsschritt des Empfängers benutzermäßig bestimmt werden.

**12.** Verfahren nach Anspruch 1, wobei die Anzahl der Ströme von Datenteilsignalen variabel ist.

**13.** Verfahren nach Anspruch 1, wobei die Anzahl der Ströme gewählt wird, um den Fehler zwischen den Schätzungen der Datenteilsignale und den Datenteilsignalen selber zu minimieren.

14. Verfahren nach Anspruch 1, wobei die Anzahl der Ströme ausgewählt wird, um die Bitfehlerrate des Systems zu minimieren.

15. Verfahren zum Senden von Datensignalen (50) von mindestens zwei Sendeterminals (20), die jeweils mit Sendemitteln mit Raumdiversität (60) versehen sind, an mindestens einen Empfangsterminal (40) mit einem Empfangsmittel mit Raumdiversität (80), umfassend folgende Schritte:

Unterteilen (105) der Datensignale (50) in eine Vielzahl von Strömen von Datenteilsignalen (108),
Umwandeln von Versionen der Ströme der Datenteilsignale (108) in umgewandelte Datensignale (70),
Senden der umgewandelten Datensignale (70) von den Sendeterminals (20) aus,
Empfangen an dem Empfangsmittel mit Raumdiversität (80) von empfangenen Datensignalen, die zumindest eine Funktion von mindestens zweien der umgewandelten Datensignale (70) sind,
Teilbandverarbeiten (90) von mindestens zweien der empfangenen Datensignale in dem Empfangsterminal (40),
Anwenden einer linearen Filterung (95) auf die teilbandverarbeiteten empfangenen Datensignale, wobei die lineare Filterung und die Umwandlung derart gewählt werden, dass die gefilterten teilbandverarbeiteten empfangenen Datensignale für einen der Sendeterminals spezifisch sind und eine Störung zwischen mindestens zwei Strömen der Vielzahl von Strömen von Datenteilsignalen aufweisen,
Bestimmen (150) von Schätzungen der Datenteilsignale (120) aus den gefilterten teilbandverarbeiteten empfangenen Datensignale (140) in dem Empfangsterminal,
Beseitigen an dem Empfangsterminal der Störung zwischen den mindestens zwei Strömen der Schätzungen der Datenteilsignale, und
Zusammenfassen der Schätzungen der Datenteilsignale zu Schätzungen der Datensignale.

16. Verfahren nach Anspruch 15, wobei das Senden mindestens teilweise gleichzeitig ist.

17. Verfahren nach Anspruch 15, wobei die Spektren der umgewandelten Datensignale sich mindestens teilweise überdecken.

18. Verfahren nach Anspruch 15, wobei das Umwandeln der Datenteilsignale (50) in umgewandelte Datenteilsignale (70) den Schritt des umgekehrten Teilbandverarbeitens (160) umfasst.

19. Verfahren nach Anspruch 15, wobei der Schritt des Bestimmens (150) von Schätzungen der Datenteilsignale aus teilbandverarbeiteten empfangenen Datensignalen im Empfangsterminal folgende Schritte umfasst:

Bestimmen (100) von Zwischenschätzungen der Datenteilsignale (130) aus den teilbandverarbeiteten empfangenen Datensignalen im Empfangsterminal,
Erlangen von Schätzungen der Datenteilsignale (120) durch umgekehrtes Teilbandverarbeiten (110) der Zwischenschätzungen.

20. Gerät zum Senden von umgekehrt teilbandverarbeiteten kombinierten Datensignalen an mindestens zwei Benutzerempfangsterminals mit Raumdiversitätsmitteln, mindestens umfassend:

mindestens ein Sendemittel mit Raumdiversität,
Schaltungen, die dazu geeignet sind, Datensignale in Ströme von Datenteilsignalen zu unterteilen,
Schaltungen, die dazu geeignet sind, die Datensignale zu kombinieren, umfassend ein Filter, das derart ausgelegt ist, dass mindestens eines der Raumdiversitätsmittel der Benutzerempfangsterminals nur Datenteilsignale empfängt, die für den entsprechenden Benutzerempfangsterminal spezifisch sind und eine Störung zwischen mindestens zwei Strömen von Datenteilsignalen aufweist,
Schaltungen, die zum umgekehrten Teilbandverarbeiten von kombinierten Datensignalen geeignet sind,
Schaltungen die zum Senden von umgekehrt teilbandverarbeiteten kombinierten Datensignalen mit den Raumdiversitätsmitteln geeignet sind.

21. Gerät nach Anspruch 20, wobei die Schaltungen, die zum Kombinieren von Datensignalen geeignet sind, eine Vielzahl von Schaltungen umfassen, die jeweils zum Kombinieren von Datensignalen auf einem Teil der Teilbänder der Datenteilsignale basierend geeignet sind.

22. Gerät nach Anspruch 20, wobei die Sendemittel mit Raumdiversität mindestens zwei Sendemittel umfassen und die Schaltungen, die zum Senden von umgekehrt teilbandverarbeiteten kombinierten Datensignalen geeignet sind, eine Vielzahl von Schaltungen umfassen, die jeweils zum Senden der umgekehrt teilbandverarbeiteten kombinierten Datensignale mit einem der Sendemittel der Raumdiversitätsmittel geeignet sind.

23. Gerät zum Senden von Datensignalen an mindestens zwei Benutzerempfangsterminals mit Raumdiversitätsmitteln, mindestens umfassend:

mindestens ein Sendemittel mit Raumdiversität, Schaltungen, die dazu geeignet sind, Datensignale in Ströme von Datenteilsignalen zu unterteilen,
Schaltungen, die dazu geeignet sind, Versionen der Ströme von Datenteilsignalen umzuwandeln,
Schaltungen, die dazu geeignet sind, mit Raumdiversitätsmitteln die umgewandelten Versionen der Ströme von Datenteilsignalen zu senden, umfassend ein Filter, das derart ausgelegt ist, dass mindestens eines der Raumdiversitätsmittel der Benutzerempfangsterminals nur Datenteilsignale empfängt, die für den entsprechenden Benutzerempfangsterminal spezifisch sind und eine Störung zwischen mindestens zwei Strömen von Datenteilsignalen aufweisen.

**Revendications**

1. Procédé de transmission de signaux de données (200) à partir d'au moins un terminal de transmission (240) avec un moyen de diversité spatiale (220) vers au moins deux terminaux utilisateur de réception (330), dotés chacun de moyens de réception de diversité spatiale (320), comprenant les étapes consistant à :

diviser (205) lesdits signaux de données (200) en une pluralité de flux de sous-signaux de données (210),
déterminer (250) des signaux de données combinés (300) dans ledit terminal de transmission, lesdits signaux de données combinés étant des versions desdits flux de sous-signaux de données (210) transformés par une étape de filtrage de l'émetteur conçue de telle sorte qu'au moins l'un desdits moyens de diversité spatiale (320) desdits terminaux utilisateur de réception reçoive seulement les sous-signaux de données spécifiques au terminal utilisateur de réception correspondant, et ayant une interférence entre au moins deux flux de ladite pluralité de flux de sous-signaux de données, ladite étape de filtrage de l'émetteur étant spécifique pour ledit terminal utilisateur de réception correspondant,
traiter en sous-bande inverse (260) lesdits signaux de données combinés (300),
transmettre avec lesdits moyens de diversité spatiale (220) lesdits signaux de données combinés traités en sous-bande inverse,
recevoir sur au moins l'un des moyens de réception de diversité spatiale (320) d'au moins l'un desdits signaux de données reçus des terminaux utilisateur de réception (330), étant au moins fonction desdits signaux de données combinés traités en sous-bande inverse,
déterminer sur au moins l'un desdits terminaux utilisateur de réception (330) des estimations desdits sous-signaux de données à partir desdits signaux de données reçus,
éliminer sur ledit au moins un terminal utilisateur de réception ladite interférence entre lesdits au moins deux flux desdites estimations desdits sous-signaux de données, et
recueillir lesdites estimations desdits sous-signaux de données dans des estimations desdits signaux de données.

2. Procédé selon la revendication 1, dans lequel ladite transmission desdits signaux de données combinés traités en sous-bande inverse est réalisée d'une façon au moins partiellement simultanée.

3. Procédé selon la revendication 1, dans lequel les spectres desdits signaux de données combinés traités en sous-bande inverse se chevauchent au moins partiellement.

4. Procédé selon la revendication 1, dans lequel l'étape de détermination des signaux de données combinés dans ledit terminal de transmission est réalisée sur une base sous-bande par sous-bande.

5. Procédé selon la revendication 1, dans lequel l'étape de détermination desdites estimations desdits sous-signaux de données dans lesdits terminaux de réception comprend le traitement des sous-bandes (350).

6. Procédé selon la revendication 1, dans lequel l'étape de détermination des signaux de données combinés dans ledit terminal de transmission comprend les étapes consistant à :

déterminer les signaux de données combinés intermédiaires (290) par un traitement des sous-bandes (280) desdits signaux de données,
déterminer (270) lesdits signaux de données combinés à partir desdits signaux de données combinés intermédiaires.

7. Procédé selon les revendications 5 et 6, dans lequel ledit traitement des sous-bandes est un démultiplexage par division en fréquences orthogonales.

8. Procédé selon la revendication 1, dans lequel ledit traitement en sous-bandes inverses est un démultiplexage par division en fréquences orthogonales.

9. Procédé selon la revendication 1, dans lequel :

lesdites sous-bandes impliquées dans le traitement en sous-bandes inverses sont groupées en ensembles, au moins un ensemble comprenant au moins deux sous-bandes,
l'étape de détermination (250) des signaux de données combinés (300) dans ledit terminal de transmission (240) comprend les étapes consistant à :

déterminer les relations entre lesdits signaux de données et lesdits signaux de données combinés ensemble par ensemble ; et
exploiter lesdites relations entre lesdits signaux de données et lesdits signaux de données combinés pour déterminer lesdits signaux de données.

10. Procédé selon la revendication 1, dans lequel dans lesdits signaux de données combinés traités en sous-bande inverse, un intervalle de protection est introduit.

11. Procédé selon la revendication 1, dans lequel l'étape de détermination des estimations desdits sous-signaux comprend une étape de filtrage du récepteur, ladite étape de filtrage du transmetteur et ladite étape de filtrage du récepteur étant déterminées sur une base utilisateur par utilisateur.

12. Procédé selon la revendication 1, dans lequel le nombre desdits flux de sous-signaux de données est variable.

13. Procédé selon la revendication 1, dans lequel le nombre desdits flux est sélectionné de façon à minimiser l'erreur entre lesdites estimations desdits sous-signaux de données et lesdits sous-signaux de données eux-mêmes.

14. Procédé selon la revendication 1, dans lequel le nombre desdits flux est sélectionné de façon à minimiser le taux d'erreur binaire du système.

15. Procédé de transmission de signaux de données (50) à partir d'au moins deux terminaux de transmission (20), dotés chacun de moyens de transmission de diversité spatiale (60) vers au moins un terminal de réception (40) avec un moyen de transmission de diversité spatiale (80) comprenant les étapes consistant à :

diviser (105) lesdits signaux de données (50) en une pluralité de flux de sous-signaux de données (108),
transformer les versions desdits flux desdits sous-signaux de données (108) en signaux de données transformés (70),
transmettre à partir desdits terminaux de transmission (20) lesdits signaux de données transformés (70),
recevoir sur ledit moyen de réception de diversité spatiale (80), les signaux de données reçus étant au moins fonction d'au moins deux desdits signaux de données transformés (70),
traiter en sous-bande (90) au moins deux desdits signaux de données reçus dans ledit terminal de réception (40),
appliquer un filtrage linéaire (95) sur lesdits signaux de données reçus traités en sous-bande, ledit filtrage linéaire et ladite transformation étant sélectionnés de telle sorte que lesdits signaux de données reçus traités en sous-bande filtrés soient spécifiques pour l'un desdits terminaux de transmission et aient une interférence entre au moins deux flux de ladite pluralité de flux de sous-signaux de données,
déterminer (150) les estimations desdits sous-signaux de données (120) à partir desdits signaux de données reçus traités en sous-bande filtrés (140) dans ledit terminal de réception,
éliminer sur ledit terminal de réception ladite interférence entre lesdits au moins deux flux desdites estimations desdits sous-signaux de données, et
recueillir lesdites estimations desdits sous-signaux de données dans les estimations desdits signaux de données.

**16.** Procédé selon la revendication 15, dans lequel ladite transmission est au moins partiellement simultanée.

**17.** Procédé selon la revendication 15, dans lequel les spectres desdits signaux de données transformés se chevauchent au moins partiellement.

**18.** Procédé selon la revendication 15, dans lequel ladite transformation desdits sous-signaux de données (50) en sous-signaux de données transformés (70) comprend l'étape de traitement en sous-bande inverse (160).

**19.** Procédé selon la revendication 15, dans lequel ladite étape de détermination (150) des estimations desdits sous-signaux de données à partir des signaux de données reçus traités en sous-bande dans ledit terminal de réception comprend les étapes consistant à :

déterminer (100) les estimations intermédiaires desdits sous-signaux de données (130) à partir desdits signaux de données reçus traités en sous-bande dans ledit terminal de réception,
obtenir lesdites estimations desdits sous-signaux de données (120) par un traitement en sous-bande inverse (110) desdites estimations intermédiaires.

**20.** Appareil pour transmettre des signaux de données combinés traités en sous-bande inverse à au moins deux terminaux utilisateur de réception avec un moyen de diversité spatiale, comprenant au moins :

au moins un moyen de transmission de diversité spatiale,
un circuit adapté pour diviser les signaux de données en flux de sous-signaux de données,
un circuit adapté pour combiner les signaux de données, comprenant un filtre conçu de telle sorte qu'au moins l'un desdits moyens de diversité spatiale desdits terminaux utilisateur de réception reçoive seulement les sous-signaux de données spécifiques pour le terminal utilisateur de réception correspondant et ayant une interférence entre au moins deux flux de sous-signaux de données,
un circuit adapté pour traiter en sous-bande inverse les signaux de données combinés,
un circuit adapté pour transmettre les signaux de données combinés traités en sous-bande inverse avec ledit moyen de diversité spatiale.

**21.** Appareil selon la revendication 20, dans lequel ledit circuit adapté pour combiner les signaux de données comprenant une pluralité de circuits, chacun adapté pour combiner les signaux de données basés sur une partie des sous-bandes desdits sous-signaux de données.

**22.** Appareil selon la revendication 20, dans lequel ledit moyen de transmission de diversité spatiale comprend au moins deux moyens de transmission et ledit circuit est adapté pour transmettre les signaux de données combinés traités en sous-bande inverse comprend une pluralité de circuits, chacun adapté pour transmettre lesdits signaux de données combinés traités en sous-bande inverse avec l'un desdits moyens de transmission desdits moyens de diversité spatiale.

**23.** Appareil pour transmettre des signaux de données à au moins deux terminaux utilisateur de réception avec un moyen de diversité spatiale, comprenant au moins :

au moins un moyen de transmission de diversité spatiale,
un circuit adapté pour diviser les signaux de données en flux de sous-signaux de données,
un circuit adapté pour transformer les versions desdits flux de sous-signaux de données,
un circuit adapté pour transmettre avec le moyen de diversité spatiale lesdites versions transformées desdits flux de sous-signaux de données, comprenant un filtre conçu de telle sorte qu'au moins l'un desdits moyens de diversité spatiale desdits terminaux utilisateur de réception reçoive seulement les sous-signaux de données spécifiques pour le terminal utilisateur de réception correspondant et ayant une interférence entre au moins deux flux de sous-signaux de données.

**Fig.1**

EP 1 392 004 B1

**Fig.2**

**Fig. 3**

Fig. 4

**Fig. 5**

**Fig. 6**

First order diversity
BS 8 ant. - UT 2+2+2 ant.
BS 8 ant. - UT 3+3+3 ant.
BS 9 ant. - UT 2+2+2 ant.
BS 9 ant. - UT 3+3+3 ant.

EP 1 392 004 B1

| # of UT antenna | $G^u$ | $H^u$ | $N^u$ | $E^u$ | $H^u \cdot N_u$ |
|---|---|---|---|---|---|
| 2 | 2x2 | 2x8 | 8x4 | 4x2 | 2x4 |
| 3 | 2x3 | 3x8 | 8x2 | 2x2 | 3x2 |

**Fig. 7**

**Fig. 8**

**Fig. 9**

Fig. 10

**Fig. 11**

**Fig. 12**

EP 1 392 004 B1

**Fig. 13**

**Fig. 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0171928 A

- WO 0233848 A2

**Non-patent literature cited in the description**

- **H. SAMPATH ; A. PAULRAJ.** Joint TX & RX Optimisation for High Data Rate Wireless Communication Using Multiple Antennas. *Asilomar conf. On signals, systems and computers,* November 1999, 215-219

- **H. SAMPATH ; P. STOICA ; A. PAULRAJ.** Generalised Linear Precoder and Decoder Design for MIMO Channels Using the Weighted MMSE Criterion. *IEEE Transactions on Communications,* December 2001, vol. 49 (12